(19) Europäisches Patentamt
European Patent Office
Office européen des brevets

(11) **EP 4 765 706 A1**

(12) **EUROPEAN PATENT APPLICATION**
published in accordance with Art. 153(4) EPC

(43) Date of publication:
**24.06.2026 Bulletin 2026/26**

(21) Application number: **23950051.5**

(22) Date of filing: **28.08.2023**

(51) International Patent Classification (IPC):
***H04L 5/00*** *(2006.01)*

(52) Cooperative Patent Classification (CPC):
**H04L 5/00**

(86) International application number:
**PCT/CN2023/115345**

(87) International publication number:
**WO 2025/043457 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **HUAWEI TECHNOLOGIES CO., LTD.
Shenzhen 518129 (CN)**

(72) Inventors:
• **MA, Qianli**
  **Shenzhen, Guangdong 518129 (CN)**
• **HUANG, Huang**
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD AND APPARATUS**

(57) This application discloses a communication method and apparatus. The method includes: generating a first symbol sequence, where the first symbol sequence includes a demodulation reference signal DMRS symbol sequence, the DMRS symbol sequence includes a first DMRS symbol sequence and a second DMRS symbol sequence, the first DMRS symbol sequence is located at a head of the first symbol sequence, and the second DMRS symbol sequence is located at a tail of the first symbol sequence; processing the first symbol sequence to obtain a second symbol sequence, where the processing includes transform precoding; and outputting the second symbol sequence. According to the foregoing method, because a symbol sequence (that is, the first symbol sequence) prior to transform precoding may include the DMRS symbol sequence, a DMRS symbol and a data symbol are multiplexed into a same time domain symbol in a time-division manner, to effectively reduce a PAPR and improve data transmission performance.

FIG. 5

**Description**

## TECHNICAL FIELD

This application relates to the field of communication technologies, and in particular, to a communication method and apparatus.

## BACKGROUND

A demodulation reference signal (demodulation reference signal, DMRS) may be used for estimation of an equivalent channel of a data channel or a control channel. The data channel may be, for example, a physical uplink shared channel (physical uplink shared channel, PUSCH) or a physical downlink shared channel (physical downlink shared channel, PDSCH). The control channel may be, for example, a physical downlink control channel (physical downlink control channel, PDCCH). The data channel is used as an example. The DMRS may be used for estimation of an equivalent channel of a data signal carried in the data channel, to facilitate detection and demodulation of data in the data channel.

In existing solutions, a DMRS sequence is typically mapped onto a corresponding frequency domain resource after transform precoding. According to the method, when data and the DMRS are located in different time domain symbols, a peak-to-average power ratio (peak-to-average power ratio, PAPR) can be reduced. However, when the data and the DMRS are mapped onto a same time domain symbol, a high PAPR is caused, and data transmission is affected.

## SUMMARY

This application provides a communication method and apparatus, to insert a DMRS symbol into a time domain symbol prior to transform precoding, so that a DMRS and data are multiplexed into a same time domain symbol in a time-division manner, to effectively reduce a PAPR and improve transmission performance.

**According to a first aspect,** this application provides a communication method. The method may be applied to a transmit end, a processor in the transmit end, a chip or a chip system, a functional module, or the like. An example in which the method is applied to the transmit end and the transmit end is a terminal device is used. Unless otherwise specified, the "terminal device" may be the terminal device itself, or may be a component in the terminal device, for example, a system-on-a-chip SoC. In the method, the terminal device generates a first symbol sequence, where the first symbol sequence includes a demodulation reference signal DMRS symbol sequence, the DMRS symbol sequence includes a first DMRS symbol sequence and a second DMRS symbol sequence, the first DMRS symbol sequence is located at a head of the first symbol sequence, and the second DMRS symbol sequence is located at a tail of the first symbol sequence; processes the first symbol sequence to obtain a second symbol sequence, where the processing includes transform precoding; and outputs the second symbol sequence.

According to the foregoing method, because a symbol sequence (that is, the first symbol sequence) prior to transform precoding may include the DMRS symbol sequence, a DMRS symbol and a data symbol are multiplexed into a same time domain symbol in a time-division manner, to effectively reduce a PAPR and improve data transmission performance. In addition, channel estimation performance can be effectively improved, which facilitates correct demodulation of data.

In a possible design, at least a part of the first DMRS symbol sequence and/or at least a part of the second DMRS symbol sequence are/is used for phase noise estimation.

In this way, a location of the DMRS symbol sequence in the first symbol sequence is set (that is, the first DMRS symbol sequence is located at the head of the first symbol sequence, and the second DMRS symbol sequence is located at the tail of the first symbol sequence), so that at least the part of the first DMRS symbol sequence and/or at least the part of the second DMRS symbol sequence can be used for phase noise estimation, which helps reduce PTRS overheads and improve phase noise estimation performance.

In a possible design, the first symbol sequence further includes M phase tracking reference signal PTRS groups, a location that is of a PTRS symbol in the M PTRS groups and that is in the first symbol sequence is determined based on a first value (or the location that is of the PTRS symbol in the M PTRS groups and that is in the first symbol sequence is related to the first value), and the first value is equal to a number of resource elements REs (or a number of subcarriers) in a scheduled bandwidth minus a number of REs corresponding to the DMRS symbol sequence.

In a possible design, M is equal to P, P-1, or P-2, P is a $k^{th}$ power of 2, and k is a positive integer.

In this way, a PTRS mapping manner is provided, which facilitates PTRS mapping. In the conventional technology, the symbol sequence (that is, the first symbol sequence) prior to transform precoding does not include the DMRS symbol sequence. Therefore, a PTRS may be mapped based on the number of REs in the scheduled bandwidth. However, in this embodiment of this application, because the symbol sequence prior to transform precoding includes the DMRS symbol sequence, the location of the PTRS symbol in the first symbol sequence may be determined based on the first value, which facilitates proper placement of a DMRS and the PTRS.

In a possible design, when M is equal to P or P-1, at least the part of the first DMRS symbol sequence and/or at least the part of the second DMRS symbol sequence are/is used for phase noise estimation, or when M is equal to P-2, at least the part of the first DMRS symbol sequence and at least the part of the second DMRS symbol sequence are used for phase noise estimation.

In a possible design, the first symbol sequence further includes X PTRS symbols of N PTRS symbols, locations of the N PTRS symbols are determined based on a second value (or the locations of the N PTRS symbols are related to the second value), the second value is equal to a number of REs in a scheduled bandwidth, and both N and X are positive integers. A location of a PTRS symbol other than the X PTRS symbols of the N PTRS symbols overlaps a location of the DMRS symbol sequence.

In this way, a PTRS mapping manner is provided, which helps implement PTRS mapping. In the conventional technology, the symbol sequence (that is, the first symbol sequence) prior to transform precoding does not include the DMRS symbol sequence. Therefore, the PTRS may be mapped based on the number of REs in the scheduled bandwidth. In this embodiment of this application, the PTRS may be mapped in the manner in the conventional technology. However, because the symbol sequence prior to transform precoding includes the DMRS symbol sequence, when the location of the PTRS symbol overlaps a location of a DMRS symbol, the PTRS symbol needs to be punctured (that is, a priority of the DMRS symbol is higher than a priority of the PTRS symbol), which facilitates proper placement of a DMRS and the PTRS.

In a possible design, the first DMRS symbol sequence includes a DMRS basic symbol sequence, and the second DMRS symbol sequence includes a cyclic prefix CP of the DMRS basic symbol sequence; or the first DMRS symbol sequence includes the DMRS basic symbol sequence and one part of the CP, and the second DMRS symbol sequence includes the other part of the CP; or the first DMRS symbol sequence includes the DMRS basic symbol sequence and a cyclic suffix CS of the DMRS basic symbol sequence, and the second DMRS symbol sequence includes the CP; or the first DMRS symbol sequence includes the DMRS basic symbol sequence, one part of the CP, and the CS, and the second DMRS symbol sequence includes the other part of the CP; or the first DMRS symbol sequence includes the CS, and the second DMRS symbol sequence includes the CP and the DMRS basic symbol sequence; or the first DMRS symbol sequence includes one part of the CS, and the second DMRS symbol sequence includes the CP, the DMRS basic symbol sequence, and the other part of the CS.

In a possible design, a number of symbols in the other part of the CP is equal to a number of PTRS symbols in one PTRS group in the first symbol sequence, or a number of symbols in the part of the CS is equal to the number of PTRS symbols in the PTRS group.

In a possible design, a number of symbols in the first DMRS symbol sequence is equal to a number of PTRS symbols in one PTRS group in the first symbol sequence, or a number of symbols in the second DMRS symbol sequence is equal to the number of PTRS symbols in the PTRS group.

In this way, because in the conventional technology, the PTRS group may be located at the head or the tail, when the number of symbols in the first DMRS symbol sequence is equal to the number of PTRS symbols in the PTRS group, or the number of symbols in the second DMRS symbol sequence is equal to the number of PTRS symbols in the PTRS group, complexity of performing phase noise estimation by the network device based on the first DMRS symbol sequence or the second DMRS symbol sequence can be effectively simplified.

In a possible design, generating the first symbol sequence includes: receiving first information from a network device, where the first information includes at least one of the following: the number of symbols in the first DMRS symbol sequence; the number of symbols in the second DMRS symbol sequence; a first index value, where the first index value is associated with the number of symbols in the first DMRS symbol sequence and/or the number of symbols in the second DMRS symbol sequence; a location index of the first DMRS symbol sequence; a location index of the second DMRS symbol sequence; and a second index value, where the second index value is associated with the location index of the first DMRS symbol sequence and/or the location index of the second DMRS symbol sequence.

In this way, the network device may indicate a specific location of the DMRS symbol sequence in the first symbol sequence to the terminal device based on the first information, which facilitates management and control by the network device over the terminal device.

In a possible design, generating the first symbol sequence includes: generating a third symbol sequence, where the third symbol sequence includes the DMRS symbol sequence, and the DMRS symbol sequence is continuously distributed in the third symbol sequence; and performing a cyclic shift on the third symbol sequence to obtain the first symbol sequence.

In a possible design, performing the cyclic shift on the third symbol sequence to obtain the first symbol sequence includes: receiving second information from the network device, where the second information indicates a cyclic shift value; and performing the cyclic shift on the third symbol sequence based on the cyclic shift value to obtain the first symbol sequence.

In this way, the network device may indicate the cyclic shift value to the terminal device based on the second information, which facilitates management and control by the network device over the terminal device.

**According to a second aspect,** this application provides a communication method. The method may be applied to a receive end, a processor in the receive end, a chip or a chip system, a functional module, or the like. An example in which the method is applied to the receive end, and the receive end is a network device is used. Unless otherwise specified, the "network device" may be the network device itself, or may be a component in the network device, for example, a system-on-a-chip SoC. In the method, a network device receives a second symbol sequence, and processes the second symbol sequence to obtain a first symbol sequence, where the processing includes inverse transform precoding, the first symbol sequence includes a DMRS symbol sequence, the DMRS symbol sequence includes a first DMRS symbol sequence and a second DMRS symbol sequence, the first DMRS symbol sequence is located at a head of the first symbol sequence, and the second DMRS symbol sequence is located at a tail of the first symbol sequence; and performs phase noise estimation based on at least a part of the first DMRS symbol sequence and/or at least a part of the second DMRS symbol sequence.

According to the foregoing method, because a symbol sequence (that is, the first symbol sequence) prior to transform precoding may include the DMRS symbol sequence, a DMRS symbol and a data symbol are multiplexed into a same time domain symbol in a time-division manner, to effectively reduce a PAPR and improve data transmission performance. In addition, channel estimation performance can be effectively improved, which facilitates correct demodulation of data. Further, a location of the DMRS symbol sequence in the first symbol sequence is set (that is, the first DMRS symbol sequence is located at the head of the first symbol sequence, and the second DMRS symbol sequence is located at the tail of the first symbol sequence), so that at least the part of the first DMRS symbol sequence and/or at least the part of the second DMRS symbol sequence can be used for phase noise estimation, which helps reduce PTRS overheads and improve phase noise estimation performance.

In a possible design, the first symbol sequence further includes M phase tracking reference signal PTRS groups, a location that is of a PTRS symbol in the M PTRS groups and that is in the first symbol sequence is determined based on a first value, and the first value is equal to a number of REs in a scheduled bandwidth minus a number of REs corresponding to the DMRS symbol sequence.

In a possible design, M is equal to P, P-1, or P-2, P is a $k^{th}$ power of 2, and k is a positive integer.

In a possible design, performing phase noise estimation based on at least the part of the first DMRS symbol sequence and/or at least the part of the second DMRS symbol sequence includes: When M is equal to P or P-1, performing phase noise estimation based on at least the part of the first DMRS symbol sequence and/or at least the part of the second DMRS symbol sequence; or when M is equal to P-2, performing phase noise estimation based on at least the part of the first DMRS symbol sequence and at least the part of the second DMRS symbol sequence.

In a possible design, the first symbol sequence further includes X PTRS symbols of N PTRS symbols, locations of the N PTRS symbols are determined based on a second value, the second value is equal to a number of REs in a scheduled bandwidth, and both N and X are positive integers. A location of a PTRS symbol other than the X PTRS symbols of the N PTRS symbols overlaps a location of the DMRS symbol sequence.

In a possible design, the first DMRS symbol sequence includes a DMRS basic symbol sequence, and the second DMRS symbol sequence includes a cyclic prefix CP of the DMRS basic symbol sequence; or the first DMRS symbol sequence includes the DMRS basic symbol sequence and one part of the CP, and the second DMRS symbol sequence includes the other part of the CP; or the first DMRS symbol sequence includes the DMRS basic symbol sequence and a cyclic suffix CS of the DMRS basic symbol sequence, and the second DMRS symbol sequence includes the CP; or the first DMRS symbol sequence includes the DMRS basic symbol sequence, one part of the CP, and the CS, and the second DMRS symbol sequence includes the other part of the CP; or the first DMRS symbol sequence includes the CS, and the second DMRS symbol sequence includes the CP and the DMRS basic symbol sequence; or the first DMRS symbol sequence includes one part of the CS, and the second DMRS symbol sequence includes the CP, the DMRS basic symbol sequence, and the other part of the CS.

In a possible design, a number of symbols in the other part of the CP is equal to a number of PTRS symbols in one PTRS group in the first symbol sequence, or a number of symbols in the part of the CS is equal to the number of PTRS symbols in the PTRS group.

In a possible design, the method further includes: sending first information to a terminal device, where the first information includes at least one of the following: the number of symbols in the first DMRS symbol sequence; the number of symbols in the second DMRS symbol sequence; a first index value, where the first index value is associated with the number of symbols in the first DMRS symbol sequence and/or the number of symbols in the second DMRS symbol sequence; a location index of the first DMRS symbol sequence; a location index of the second DMRS symbol sequence; and a second index value, where the second index value is associated with the location index of the first DMRS symbol sequence and/or the location index of the second DMRS symbol sequence.

In a possible design, the method further includes: sending second information to a terminal device, where the second information indicates a cyclic shift value, the cyclic shift value is used to perform a cyclic shift on a third symbol sequence, the third symbol sequence includes the DMRS symbol sequence, and the DMRS symbol sequence is continuously distributed in the third symbol sequence.

The communication method provided in the second aspect corresponds to the communication method provided in the first aspect. For beneficial effects of related technical features in the second aspect, refer to the descriptions in the first aspect. Details are not described again.

**According to a third aspect,** this application provides a communication apparatus. The communication apparatus can implement functions in the first aspect or the second aspect. For example, the communication apparatus includes a corresponding module, unit, or means for performing operations in the first aspect or the second aspect. The module, unit, or means may be implemented by using software, may be implemented by using hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to send system information to a terminal. The processing unit may be configured to perform some internal operations of the communication apparatus. Functions performed by the processing unit and the communication unit may correspond to operations in the first aspect or the second aspect.

In a possible design, the communication apparatus includes a processor, and the processor may be configured to be coupled to a memory. The memory may store a computer program or instructions necessary for implementing the functions in the first aspect or the second aspect. The processor may execute the computer program or the instructions stored in the memory. When the computer program or the instructions are executed, the communication apparatus is enabled to implement the method according to any possible design or implementation of the first aspect or the second aspect.

In a possible design, the communication apparatus includes a processor and a memory. The memory may store a necessary computer program or necessary instructions to implement the functions in the first aspect or the second aspect. The processor may execute the computer program or the instructions stored in the memory. When the computer program or the instructions are executed, the communication apparatus is enabled to implement the method according to any possible design or implementation of the first aspect or the second aspect.

In a possible design, the communication apparatus includes a processor and an interface circuit. The processor is configured to communicate with another apparatus via the interface circuit, and perform the method according to any possible design or implementation of the first aspect or the second aspect.

It may be understood that in the third aspect, the processor may be implemented by hardware or software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into a same chip, or may be disposed on different chips. A type of the memory and a manner in which the memory and the processor are disposed are not limited in embodiments of this application.

**According to a fourth aspect,** this application provides a communication system. The communication system may include a first communication apparatus and a second communication apparatus. The first communication apparatus is configured to perform the method according to the first aspect, and the second communication apparatus is configured to perform the method according to the second aspect.

**According to a fifth aspect,** this application provides a computer-readable storage medium. The computer storage medium stores a computer program (or computer-readable instructions), and when a computer reads and executes a part or all of the computer-readable instructions, the method according to any possible design of the first aspect or the second aspect is performed.

For example, the computer-readable storage medium may be any available medium accessible to the computer. As an example rather than a limitation, the computer-readable medium may include a non-transitory computer-readable medium, a random-access memory (random-access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can be used to carry or store desired program code in a form of instructions or a data structure and that can be accessed by the computer.

**According to a sixth aspect,** this application provides a computer program product. When a computer reads and executes the computer program product, to enable the method according to any possible design of the first aspect or the second aspect to be performed.

**According to a seventh aspect,** this application provides a chip (or a chip system). The chip includes a processor. The processor is coupled to a memory, and the memory stores a computer program. The processor is configured to invoke a part or all of the computer program in the memory, to enable the method according to any possible

## EP 4 765 706 A1

design of the first aspect or the second aspect to be performed.

## BRIEF DESCRIPTION OF DRAWINGS

FIG. 1 is a diagram of a communication system to which an embodiment of this application is applicable;
FIG. 2 is a diagram of a possible signal processing procedure of a network device and a terminal device according to an embodiment of this application;
FIG. 3 is a diagram of a PTRS group according to an embodiment of this application;
FIG. 4 is a diagram of another possible signal processing procedure of a network device and a terminal device according to an embodiment of this application;
FIG. 5 is a schematic flowchart corresponding to a communication method according to an embodiment of this application;
FIG. 6 is a diagram of a location of a DMRS symbol sequence in a first symbol sequence according to an embodiment of this application;
FIG. 7 is another diagram of a location of a DMRS symbol sequence in a first symbol sequence according to an embodiment of this application;
FIG. 8A, FIG. 8B, and FIG. 8C are diagrams of PTRS groups according to an embodiment of this application;
FIG. 9 is a diagram of a PTRS location according to an embodiment of this application;
FIG. 10 is another diagram of a PTRS location according to an embodiment of this application;
FIG. 11 is a diagram of a first symbol sequence according to an embodiment of this application;
FIG. 12 is a possible example block diagram of an apparatus according to an embodiment of this application; and
FIG. 13 is a diagram of a structure of a communication apparatus according to an embodiment of this application.

## DESCRIPTION OF EMBODIMENTS

The following describes the technical solutions in embodiments of this application with reference to the accompanying drawings in embodiments of this application. The technical solutions in embodiments of this application may be applied to various communication systems, such as a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system, for example, a long term evolution (long term evolution, LTE) system, a 5th generation (5th generation, 5G) mobile communication system, for example, a new radio (new radio, NR) system, and a future evolved communication system, for example, a 6th generation (6th generation, 6G) mobile communication system.

Particularly, embodiments of this application may be applied to a scenario in which high-frequency phase noise is severe. This application may be applied to the following scenarios: enhanced mobile broadband (enhanced mobile broadband, eMBB), multi-station transmission (a same terminal device transmits a signal to a plurality of stations), a backhaul scenario, wireless to the x (wireless to the x, WTTx), device-to-device (device-to-device, D2D), or another scenario that has a high requirement on timing or a high requirement on a transmission rate.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used. In addition, in embodiments of this application, terms such as "example" and "for example" are used to give an example, an illustration, or a description. Any embodiment or design scheme described as an "example" in this application should not be explained as being more preferred or having more advantages than another embodiment or design scheme. Exactly, the term "example" is used to present a concept in a specific manner. In embodiments of this application, "of (of)", "corresponding, relevant (corresponding, relevant)", and "corresponding (corresponding)" may be interchangeably used sometimes. It should be noted that meanings expressed by the terms are consistent when differences are not emphasized.

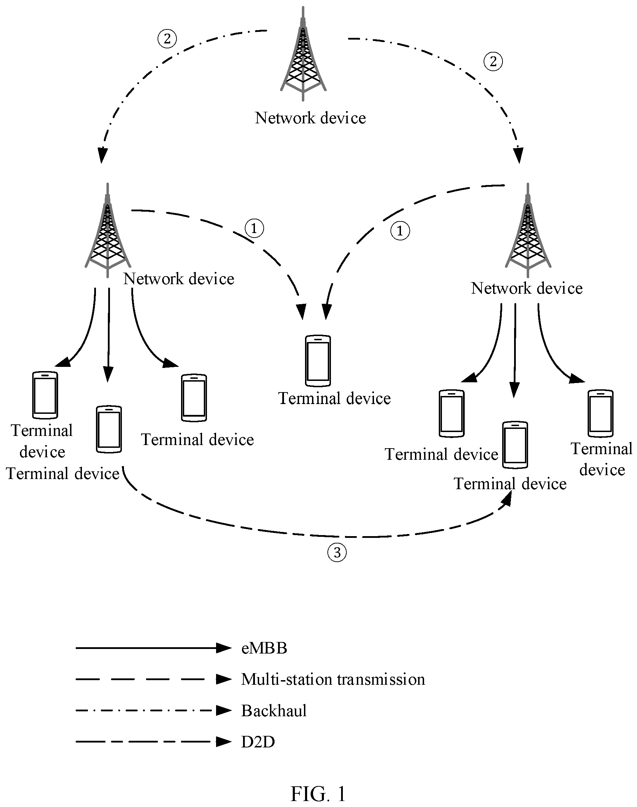

For ease of understanding of embodiments of this application, a communication system shown in FIG. 1 is first used as an example to describe in detail a communication system applicable to embodiments of this application. As shown in FIG. 1, the communication system may include one or more network devices and one or more terminal devices. An interface between the network device and the terminal device may be a Uu interface (or referred to as an air interface), and data transmission may be performed between the network device and the terminal device via an air interface resource.

FIG. 1 shows an example of a scenario to which an embodiment of this application is applicable, that is, eMBB (shown by a solid line in FIG. 1), multi-station transmission (shown by a dashed line ① in FIG. 1), a backhaul scenario (shown by a dashed line ② in FIG. 1), and D2D (shown by a dashed line ③ in FIG. 1). It should be understood that the four scenarios shown in FIG. 1 are merely examples. This is not limited in embodiments of this application.

In a possible scenario, the network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The network device may be a macro base station, a micro base station, an indoor base station, a relay node, or a donor node, or a radio controller in an open radio access network (open RAN, O-RAN, or ORAN) or a cloud radio access network (cloud radio access network, CRAN) scenario. Optionally, the network device may alternatively be a server, a wearable device, a vehicle, a vehicle-mounted device, or the like. For example, the network device in a vehicle to everything (vehicle to everything, V2X) technology may be a road side unit (road side unit, RSU). All or a part of functions of the network device in this application may alternatively be implemented by using a software function running on hardware, or may be implemented by using an instantiated virtualization function on a platform (for example, a cloud platform). The network device in this application may alternatively be a logical node, a logical module, or software that can implement all or a part of functions of the network device.

In another possible scenario, a plurality of network devices collaborate to assist the terminal device in implementing wireless access, and different network devices separately implement some base station functions. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal device may also be referred to as user equipment (user equipment, UE), a terminal device, a user apparatus, an access terminal, a subscriber unit, a subscriber station, a mobile station (mobile station, MS), a remote station, a remote terminal, a mobile device, a user terminal, a terminal unit, a terminal station, a terminal apparatus, a wireless communication device, a user agent, or a user device.

For example, the terminal device in embodiments of this application may be a mobile phone (mobile phone), a personal digital assistant (personal digital assistant, PDA) computer, a laptop computer (laptop computer), a tablet computer (Pad), an unmanned aerial machine, a computer with wireless receiving and sending functions, a machine type communication (machine type communication, MTC) terminal device, a virtual reality (virtual reality, VR) terminal device, an augmented reality (augmented reality, AR) terminal device, an internet of things (internet of things, IoT) terminal device, a wireless terminal device in industrial control (industrial control), a wireless terminal device in self driving (self driving), a wireless terminal device in telemedicine (remote medical), a wireless terminal device in a smart grid (smart grid), a wireless terminal device in transportation safety (transportation safety), a wireless terminal device in a smart city (smart city), a wireless terminal device (for example, a game machine, a smart television, a smart speaker, a smart refrigerator, or fitness equipment) in a smart home (smart home), a vehicle-mounted terminal device, or an RSU having a function of a terminal device.

In embodiments of this application, unless otherwise specified, the "terminal device" may be the terminal device itself, or may be a component in the terminal device, for example, a system-on-a-chip (system-on-a-chip, SoC), and the "network device" may be the network device itself, or may be a component in the network device, for example, the SoC.

In addition, the network device and the terminal may be deployed on the land, including an indoor device, an outdoor device, a handheld device, or a vehicle-mounted device, may be deployed on the water surface, or may be deployed on a plane, a balloon, and an artificial satellite in the air. Application scenarios of the network device and the terminal device are not limited in embodiments of this application.

The communication system and the service scenario described in embodiments of this application are intended to describe the technical solutions in embodiments of this application more clearly, and do not constitute a limitation on the technical solutions provided in embodiments of this application. A person of ordinary skill in the art may know that: With evolution of a network architecture and emergence of new scenarios, the technical solutions provided in embodiments of this application are also applicable to similar technical problems.

The following first explains and describes related terms in embodiments of this application. Unless otherwise specified, these explanations are intended to support meanings of related terms, for ease of understanding of embodiments of this application, and should not be considered as strict limitations on related terms in the protection scope claimed in this application.

### (1) Fourier transform

The Fourier transform is one of the most important tools for signal processing in a communication system, and is used to implement conversion of a signal between time domain (time-domain for short) and frequency domain (frequency-domain for short).

Common Fourier transforms include a discrete Fourier transform (discrete Fourier transform, DFT), a fast Fourier transform (fast Fourier transform, FFT), an inverse discrete Fourier transform (inverse discrete Fourier transform, IDFT), and an inverse fast Fourier transform (inverse fast Fourier transform, IFFT).

The DFT converts a time domain sequence into a frequency domain sequence, and the FFT is a method for quickly calculating the DFT. The IDFT converts a frequency domain sequence into a time domain sequence, and the IFFT is a method for quickly calculating the IDFT.

### (2) Cyclic prefix/Cyclic suffix

For a signal (or a sequence) S whose length is N, for example, $S=[s\_1, s\_2, ..., s\_N]$, the cyclic prefix (cyclic prefix, CP) is formed by taking last L elements (L represents a length of the CP) of the sequence S, and adding a taken sequence whose length is L to the beginning of the original sequence S. The sequence with the CP added is $S\_CP=[s\_N-L, s\_N-L+1, ..., s\_N, s\_1, s\_2, ..., S\_N]$, where the CP is $[s\_N-L, s\_N-L+1, ..., s\_N]$.

For a signal (or a sequence) S whose length is N, for example, $S=[s\_1, s\_2, ..., s\_N]$, the cyclic suffix (cyclic suffix, CS) is formed by taking first L elements (L represents a length of the CS) of the sequence S, and adding a taken sequence whose length is L to the end of the original sequence S. The sequence with the CS added is $S\_CS=[s\_1, s\_2, ..., S\_N, s\_1, s\_2, ..., s\_L]$, where the CS is $[s\_1, s\_2, ..., s\_L]$.

### (3) PAPR

A wireless signal, observed in time domain, is a sine wave with a changing amplitude, and the amplitude is not constant. An amplitude peak of the signal in one cycle is different from that in other cycles. Therefore, average powers and peak powers in all cycles are different. The peak power is a highest transient power that occurs with a probability over a long period of time, and the probability is usually 0.01% (namely, $10^{-4}$). A ratio of the peak power under the probability to a total average power of a system is the PAPR.

### (4) Phase tracking reference signal

In operating frequency bands of a communication system, a high frequency band (that is, a frequency band of 6 GHz or above, for example, 28 GHz, 39 GHz, 60 GHz, or 73 GHz) has become a research and development focus in the industry for meeting growing communication requirements due to abundant frequency band resources of the high frequency band. In addition to a large bandwidth and a highly integrated antenna array to implement high throughput, significant features of the high frequency band further include severe intermediate radio frequency distortion, such as phase noise and a carrier frequency offset (carrier frequency offset, CFO), and a Doppler shift in the high frequency band is also greater, and the phase noise, carrier frequency offset, and the greater Doppler shift each introduce a phase error, leading to performance degradation or even a working failure in a high-frequency communication system.

The phase noise is used as an example. As the frequency band increases, power spectral density of the phase noise is higher, and therefore impact on a received signal is greater. At a high frequency band, deterioration of phase noise causes demodulation performance of a receive signal to deteriorate. Therefore, the phase tracking reference signal (phase tracking reference signal, PTRS) is introduced in an existing NR protocol, to compensate for impact of phase noise and improve demodulation performance under a phase noise condition.

In the communication system shown in FIG. 1, a waveform used for communication between the network device and the terminal device may be a single carrier waveform, or may be a multicarrier waveform. A single carrier means that serially arranged transmit signals are convolved with a roll-off filter to form a transmit signal. A multicarrier means that transmit signals are arranged in parallel to form a transmit signal through an IFFT.

For example, the single carrier waveform may be a single carrier quadrature amplitude modulation (single carrier quadrature amplitude modulation, SC-QAM) waveform, and the multicarrier waveform may be an orthogonal frequency division multiplexing (orthogonal frequency division multiplexing, OFDM) waveform. In addition, a discrete Fourier transform-spread-orthogonal frequency division multiplexing (discrete Fourier transform-spread-orthogonal frequency division multiplexing, DFT-s-OFDM) waveform is almost equivalent to the conventional single carrier waveform. However, the discrete Fourier transform-spread-orthogonal frequency division multiplexing waveform uses an implementation of the multicarrier, and therefore is easy to be compatible with OFDM, but is still the single carrier waveform in essence.

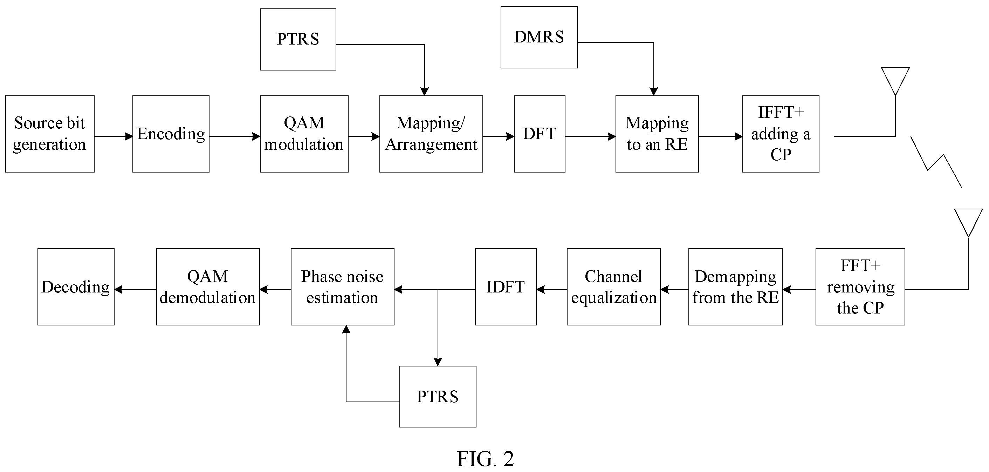

In this embodiment of this application, the DFT-s-OFDM waveform is used as an example for description. FIG. 2 is a diagram of a possible signal processing procedure of the network device and the terminal device when the network device and the terminal device communicate with each other through the DFT-s-OFDM waveform. A transmit end of a signal is the terminal device, and a receive end of the signal is the network device, or the transmit end of the signal is the terminal device, and the receive end of the signal is the network device. In FIG. 2, an example in which "the transmit end of the signal is the terminal device, and the receive end of the signal is the network device" is used for illustration.

As shown in FIG. 2, the terminal device generates a source bit (that is, a data bit stream), encodes the source bit, and performs QAM modulation on an encoded bit to obtain a modulated data symbol sequence. The terminal device maps/arranges a generated PTRS symbol sequence and the modulated data symbol sequence (which means mapping a pre-DFT data symbol and a PTRS symbol), and performs a DFT operation (which may also be referred to as transform precoding (transform precoding)) on mapped/arranged sequences. Post-DFT sequences and a generated DMRS sequence are mapped to a resource element (resource element, RE) (that is, mapped to a specified frequency domain resource), the IFFT is performed, and the CP is further superimposed to obtain a final symbol sequence. Then, the final symbol sequence is sent to the network device through a channel.

The network device performs a process inverse to that performed by the terminal device. To be specific, after receiving the symbol sequence from the terminal device, the network device removes the superimposed CP (that is, discards a signal outside an FFT receive window) from the symbol sequence, and performs an FFT. Then, the network device performs demapping from the RE and channel equalization (which includes performing operations such as channel estimation based on a DMRS), and performs an IDFT (which may also be referred to as inverse transform precoding) on a sequence for which channel equalization is completed. Then, the network device obtains the PTRS, performs phase noise estimation based on the obtained PTRS, performs phase noise compensation based on a phase noise estimation result, performs QAM demodulation and decoding on a sequence obtained after the phase noise compensation, to restore the data bit stream sent by the terminal device.

It may be understood that the related operations in FIG. 2 are merely used as an example. Optionally, other possible operations may be further included, for example, at least one of frequency domain spectrum shaping, serial-to-parallel conversion, parallel-to-serial conversion, digital-to-analog converter (digital-to-analog-converter, DAC), power amplifier (power amplifier, PA), low noise amplifier (low noise amplifier, LNA), and analog-to-digital converter (analog-to-digital converter, ADC).

The following describes a related PTRS transmission process.

Before the DFT, the terminal device may map/arrange a PTRS symbol based on a PTRS pattern, and then send the PTRS symbol to the network device. Correspondingly, the network device may receive and obtain the PTRS based on the PTRS pattern. The PTRS pattern indicates a distribution rule of the PTRS symbol in a pre-DFT time domain symbol. For example, the PTRS pattern may include a plurality of PTRS groups, each PTRS group includes a plurality of consecutive PTRS symbols, and the PTRS symbols may also be referred to as PTRS samples. The time domain symbol includes but is not limited to an OFDM symbol and a DFT-s-OFDM symbol. The description "pre-DFT time domain symbol" may also be replaced with another possible description, for example, "an OFDM symbol prior to transform precoding" (OFDM symbol prior to transform precoding).

Table 1: Correspondence between a scheduled bandwidth and the PTRS pattern

| Scheduled bandwidth (scheduled bandwidth) | Number of PTRS groups (number of PTRS groups) | Number of PTRS samples in the group (number of samples per PTRS group) |
|---|---|---|
| $N_{RB0} \leq N_{RB} < N_{RB1}$ | 2 | 2 |
| $N_{RB1} \leq N_{RB} < N_{RB2}$ | 2 | 4 |
| $N_{RB2} \leq N_{RB} < N_{RB3}$ | 4 | 2 |
| $N_{RB3} \leq N_{RB} < N_{RB4}$ | 4 | 4 |
| $N_{RB4} \leq N_{RB}$ | 8 | 4 |

Table 2: Location indexes of PTRS samples in the pre-DFT time domain symbol

| Number of PTRS groups | Number of PTRS samples in the group | Location index of the PTRS sample in the pre-DFT time domain symbol |
|---|---|---|
| 2 | 2 | $s\lfloor M_{sc}^{PUSCH}/4 \rfloor + k - 1,$<br>where $s = 1,3; k = 0,1$ |
| 2 | 4 | $sM_{sc}^{PUSCH} + k,$<br>where<br>$\begin{cases} s = 0 & ; & k = 0,1,2,3 \\ s = 1 & ; & k = -4,-3,-2,-1 \end{cases}$ |
| 4 | 2 | $\lfloor s\, M_{sc}^{PUSCH}/8 \rfloor + k - 1,$<br>where $s = 1,3,5,7; k = 0,1$ |
| 4 | 4 | $sM_{sc}^{PUSCH}/4 + n + k,$<br>where<br>$\begin{cases} s = 0 & ; & k = 0,1,2,3; & n = 0 \\ s = 1,2 & ; & k = -2,-1,0,1; & n = \lfloor M_{sc}^{PUSCH}/8 \rfloor \\ s = 4 & ; & k = -4,-3,-2,-1; & n = 0 \end{cases}$ |
| 8 | 4 | $\lfloor s\, M_{sc}^{PUSCH}/8 \rfloor + n + k,$<br>where<br>$\begin{cases} s = 0 & ; & k = 0,1,2,3; & n = 0 \\ s = 1,2,3,4,5,6 & ; & k = -2,-1,0,1; & n = \lfloor M_{sc}^{PUSCH}/16 \rfloor \\ s = 8 & ; & k = -4,-3,-2,-1; & n = 0 \end{cases}$ |

For example, the PTRS pattern may be determined by a scheduled bandwidth allocated by the network device to the terminal device. As shown in Table 1, $N_{RB}$ represents a number of resource blocks (resource blocks, RBs) included in the scheduled bandwidth, and $N_{RBi}$ (i=0, 1, 2, 3, 4) represents a threshold configured by the network device for the terminal device by using higher-layer signaling. In a data transmission process, the terminal device may determine a specific PTRS pattern during current data transmission based on a current scheduled bandwidth and Table 1. For example, when the configured scheduled bandwidth $N_{RB}$ meets the condition $N_{RB2} \leq N_{RB} < N_{RB3}$, the terminal device may determine, based on Table 1, that a number of PTRS groups in the PTRS pattern is 4, and a number of PTRS symbols in the PTRS group is 2.

Further, after the PTRS pattern (the number of PTRS groups and the number of PTRS symbols in the PTRS group) is determined, the terminal device may determine, based on Table 2, the location index of the PTRS symbol in the pre-DFT time domain symbol. A value of $M_{sc}^{PUSCH}$ in Table 2 is equal to the number of REs included in the scheduled bandwidth, or a number of subcarriers, or a number of symbols in the pre-DFT time domain symbol. Because one RB may include 12 REs, the value of $M_{sc}^{PUSCH}$ may be equal to 12*$N_{RB}$.

For example, when $M_{sc}^{PUSCH}=16$, if both the number of PTRS groups and the number of PTRS symbols in the PTRS group are 2, the location indexes of the PTRS symbols may be respectively obtained through calculation according to the formula in the first row in Table 2 as follows:

$$1*4+0-1=3;$$

$$1*4+1-1=4;$$

$$3*4+0-1=11;$$

and

$$3*4+1-1=12.$$

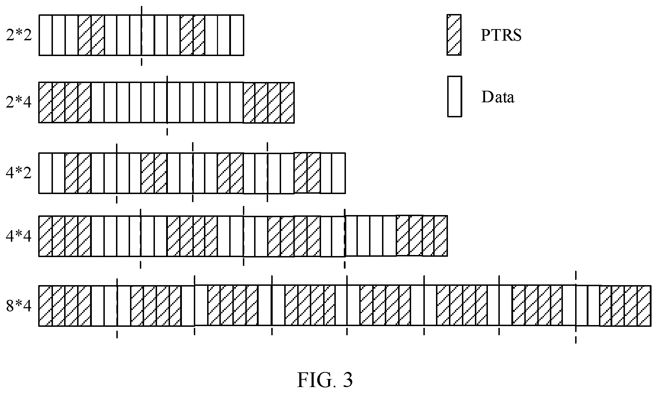

PTRS symbols whose location indexes are 3 and 4 belong to one PTRS group, and PTRS symbols whose location indexes are 11 and 12 belong to one PTRS group. For locations of the PTRS symbols, refer to a first row in FIG. 3.

When $M_{sc}^{PUSCH}=20$, if the number of PTRS groups is 2, and the number of PTRS symbols in the PTRS group is 4, for locations of the PTRS symbol, refer to a second row in FIG. 3.

When $M_{sc}^{PUSCH}=24$, if the number of PTRS groups is 4, and the number of PTRS symbols in the PTRS group is 2, for locations of the PTRS symbol, refer to a third row in FIG. 3.

When $M_{sc}^{PUSCH}=32$, if the number of PTRS groups is 4, and the number of PTRS symbols in the PTRS group is 4, for locations of the PTRS symbol, refer to a fourth row in FIG. 3.

When $M_{sc}^{PUSCH}=48$, if the number of PTRS groups is 8, and the number of PTRS symbols in the PTRS group is 4, for locations of the PTRS symbol, refer to a fifth row in FIG. 3.

In other words, the mapping rule shown in Table 2 may be understood as follows: The number of symbols in the pre-DFT time domain symbol is equally divided into a plurality of gaps (the number of PTRS groups). If the number of PTRS samples in the group is equal to 2, one PTRS group is mapped to the middle of each gap, as shown in the first row and the third row in FIG. 3. If the number of PTRS samples in the group is equal to 4, a first PTRS group is mapped to a head of a first gap, a last PTRS group is mapped to a tail of a last gap, and other PTRS groups are mapped to the middle of the gaps, as shown in the second row (in this case, there are only two segments, and therefore there is no PTRS group mapped to the middle of the two segments), the fourth row, and the fifth row in FIG. 3.

It can be learned from the procedure in FIG. 2 that after mapping/arranging the data symbol sequence and the PTRS symbol sequence, the terminal device performs the DFT operation, and maps the post-DFT sequences and the generated DMRS sequence to the RE. In this manner, when the terminal device finally sends a signal, if data and a PTRS are located in a same time domain symbol while a DMRS is located in another time domain symbol, that is, the terminal device sends the data and the reference signal to the network device over a plurality of time domain symbols, the PAPR can be effectively reduced. In addition, the DMRS is more suitable for configuration of a plurality of ports, which helps implement effective transmission of a signal.

However, in some scenarios (for example, signaling transmission of an uplink control channel, signaling transmission of a downlink control channel, or short symbol transmission in an ultra-reliable low-latency communication (ultra-reliable low-latency communication, URLLC) scenario), a small amount of information needs to be transmitted between the network device and the terminal device. For example, the terminal device sends data to the network device through only one time domain symbol. In this case, if the manner shown in FIG. 2 is used, the DMRS and the data are multiplexed into a same time domain symbol in a frequency-division manner, which results in a large PAPR. For another example, the terminal device sends the data to the network device through only a small number of consecutive time domain symbols. In this case, if the DMRS is separately placed in one time domain symbol in the manner shown in FIG. 2, DMRS overheads are excessively large. If the DMRS and the data are multiplexed into a same time domain symbol in the frequency-division manner to reduce DMRS overheads, the PAPR is also large.

**Based on this,** an embodiment of this application proposes a pre-DFT DMRS. That is, a DMRS symbol is inserted into the pre-DFT time domain symbol, so that the DMRS and data are multiplexed into a same time domain symbol in a time-division manner, to effectively reduce the PAPR and improve transmission performance.

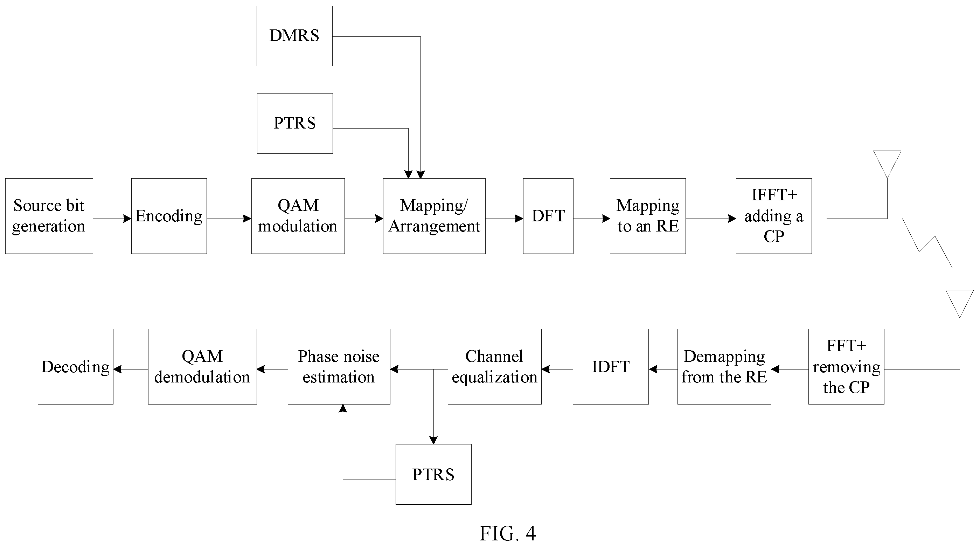

After the pre-DFT DMRS is introduced, FIG. 4 is a diagram of a possible signal processing procedure of the terminal device and the network device. Compared with FIG. 2, in FIG. 4, the terminal device may map/arrange a generated DMRS symbol sequence and a modulated data symbol sequence (and the PTRS symbol sequence), and perform the DFT operation on sequences obtained after mapping/arrangement. To be specific, the terminal device inserts the DMRS symbol into the pre-DFT time domain symbol, so that the DMRS and data are multiplexed into the time domain symbol in the time-division manner.

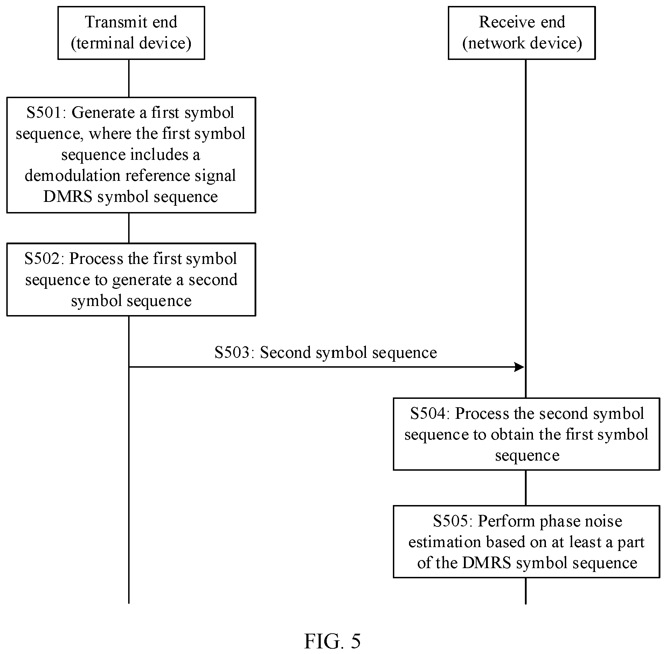

The following describes in detail the communication method provided in embodiments of this application with reference to FIG. 5. It may be understood that the technical solutions provided in embodiments of this application may be applied to wireless communication between communication devices. Wireless communication between the communication devices may include: wireless communication between a network device and a terminal device, wireless communication between network devices, and wireless communication between terminal devices. In embodiments of this application, an example in which the communication method is applied to wireless communication between a network device and a terminal device (the terminal device is the transmit end, and the network device is the receive end) is used. For other scenarios in which the communication method is applied, refer to this example.

**FIG. 5** is a schematic flowchart corresponding to the communication method according to an embodiment of this application. As shown in FIG. 5, the method includes the following steps.

**S501:** The terminal device generates a first symbol sequence, where the first symbol sequence includes a DMRS symbol sequence.

Herein, the first symbol sequence may be a pre-DFT symbol sequence. The first symbol sequence further includes a data symbol sequence, and optionally, further includes at least one PTRS group or at least one PTRS symbol.

**(1)** DMRS symbol sequence

In this embodiment of this application, the DMRS symbol sequence may include a DMRS basic symbol sequence and a CP of the DMRS basic symbol sequence, include the DMRS basic symbol sequence and a CS of the DMRS basic symbol sequence, or include the DMRS basic symbol sequence, the CP of the DMRS basic symbol sequence, and the CS of the DMRS basic symbol sequence.

The CP of the DMRS basic symbol sequence is formed by taking last L1 elements (L1 represents a length of the CP) of the DMRS basic symbol sequence, and adding taken a sequence whose length is L1 to the beginning of the DMRS basic symbol sequence. The CS of the DMRS basic symbol sequence is formed by taking first L2 elements (L2 represents a length of the CS) of the DMRS basic symbol sequence and adding a taken sequence whose length is L2 to the end of the DMRS basic symbol sequence. When the DMRS symbol sequence includes the CP of the DMRS basic symbol sequence, interference (for example, inter-symbol interference and inter-carrier interference) can be reduced. When the DMRS symbol sequence includes the CS of the DMRS basic symbol sequence, impact of spectrum spreading (frequency domain spectrum spreading, FDSS) can be reduced, and transmission performance can be improved. (For example, spectrum spreading may be bound to the CS. If spectrum spreading is required, the DMRS symbol sequence may include the CS. Otherwise, the DMRS symbol sequence does not include the CS by default).

For example, the DMRS basic symbol sequence may be generated by the terminal device based on a ZC sequence, or may be generated by the terminal device based on a pseudo-random signal sequence. For example, the ZC sequence may be:

$$x_{u,v}(n) = x_u\left((n + C_v)\bmod L_{\mathrm{RA}}\right)$$

$$x_u(i) = e^{-j\frac{\pi u i(i+1)}{L_{\mathrm{RA}}}},\ i = 0,1,...,L_{\mathrm{RA}} - 1$$

The pseudo-random signal sequence may be:

$$r(n) = \frac{1}{\sqrt{2}}\left(1 - 2 \cdot c(2n)\right) + j\frac{1}{\sqrt{2}}\left(1 - 2 \cdot c(2n+1)\right)$$

For implementation of generating the DMRS basic symbol sequence by the terminal device, refer to an existing protocol. Further, after generating the DMRS basic symbol sequence, the terminal device may perform a cyclic shift to supplement (for example, adding the CP and/or the CS) the DMRS basic symbol sequence, to obtain the DMRS symbol sequence.

**(2)** Location of the DMRS symbol sequence in the first symbol sequence

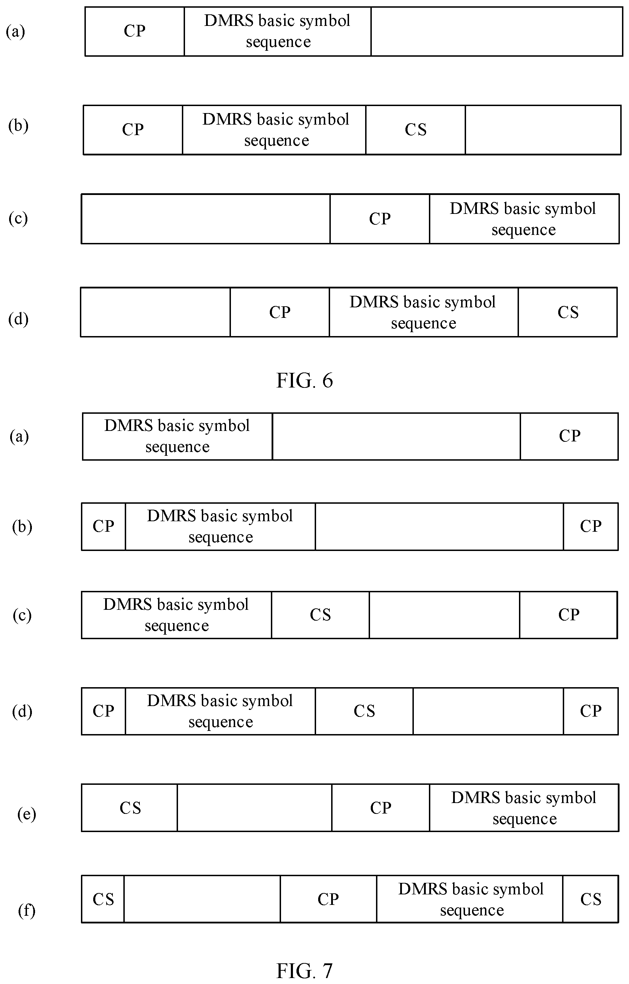

**In a possible implementation,** the DMRS symbol sequence may be continuously distributed in the first symbol sequence. For example, the DMRS symbol sequence may be located at a head of the first symbol sequence, as shown in (a) and (b) in FIG. 6, or the DMRS symbol sequence may be located at a tail of the first symbol sequence, as shown in (c) and (d) in FIG. 6.

In cases shown in (a) and (c) in FIG. 6, the DMRS symbol sequence includes the DMRS basic symbol sequence and the CP, but does not include the CS. In cases shown in (b) and (d) in FIG. 6, the DMRS symbol sequence includes the DMRS basic symbol sequence, the CP, and the CS.

It may be understood that in another possible example, the DMRS symbol sequence may alternatively be located in the middle of the first symbol sequence. However, when the DMRS symbol sequence may alternatively be located in the middle of the first symbol sequence, data symbols are scattered on two sides of the DMRS symbol sequence, and data transmission performance may deteriorate.

**In another possible implementation,** the DMRS symbol sequence may be discretely distributed in the first symbol sequence. For example, the DMRS symbol sequence may be divided into two parts: a first DMRS symbol sequence and a second DMRS symbol sequence. The first DMRS symbol sequence is located at a head of the first symbol sequence, and the second DMRS symbol sequence is located at a tail of the first symbol sequence. A number of symbols in the first symbol sequence may be equal to a number of REs in a scheduled bandwidth. The number of symbols in the first symbol sequence may be represented as $M_{sc}^{PUSCH}$, a number of symbols in the DMRS symbol sequence may be represented as D, a number of symbols in the first DMRS symbol sequence may be represented as D1, and a number of symbols in the second DMRS symbol sequence may be represented as D2. In this case, a location mapping of the DMRS symbol sequence in the first symbol sequence may be represented as $[0{:}D1;\ M_{sc}^{PUSCH}{-}1{-}\ D2{:}M_{sc}^{PUSCH}{-}1]$.

For example, the number of symbols in the first DMRS symbol sequence (that is, a length of the first DMRS symbol sequence) may be equal to a number of PTRS symbols in one PTRS group in the first symbol sequence, or the number of symbols in the second DMRS symbol sequence may be equal to the number of PTRS symbols in one PTRS group in the first symbol sequence.

Based on Example 1 to Example 6, the following describes some possible implementations of discretely distributing the DMRS symbol sequence in the first symbol sequence.

Example 1: The first DMRS symbol sequence includes the DMRS basic symbol sequence, and the second DMRS symbol sequence includes the CP of the DMRS basic symbol sequence, as shown in (a) in FIG. 7.

Example 2: The first DMRS symbol sequence includes the DMRS basic symbol sequence and one part of the CP, and the second DMRS symbol sequence includes the other part of the CP, as shown in (b) in FIG. 7.

Example 3: The first DMRS symbol sequence includes the DMRS basic symbol sequence and the CS of the DMRS basic symbol sequence, and the second DMRS symbol sequence includes the CP, as shown in (c) in FIG. 7.

Example 4: The first DMRS symbol sequence includes the DMRS basic symbol sequence, one part of the CP, and the CS, and the second DMRS symbol sequence includes the other part of the CP, as shown in (d) in FIG. 7.

Example 5: The first DMRS symbol sequence includes the CS, and the second DMRS symbol sequence includes the CP and the DMRS basic symbol sequence, as shown in (e) in FIG. 7. In this case, the length of the first DMRS symbol sequence is equal to the length of the CS.

Example 6: The first DMRS symbol sequence includes one part of the CS, and the second DMRS symbol sequence includes the CP, the DMRS basic symbol sequence, and the other part of the CS, as shown in (f) in FIG. 7.

For Example 1 to Example 6:

In Example 1 to Example 4, a length of the second DMRS symbol sequence may be equal to the length of the CP, or equal to a length of one PTRS group (that is, the number of PTRS symbols in the PTRS group) in the first symbol sequence. For example, in Example 1 or Example 3, the length of the second DMRS symbol sequence is equal to the length of the CP. In Example 2 or Example 4, it is assumed that the length of the PTRS group is less than the length of the CP. Therefore, a part of the CP may be placed at the tail of the first symbol sequence, so that the length of the second DMRS symbol sequence is equal to the length of the PTRS group.

In Example 5 and Example 6, the length of the first DMRS symbol sequence may be equal to the length of the CS, or equal to a length of one PTRS group in the first symbol sequence. For example, in Example 5, the length of the first DMRS symbol sequence is equal to the length of the CS. In Example 6, it is assumed that the length of the PTRS group is less than the length of the CS. Therefore, a part of the CS may be placed at the head of the first symbol sequence, so that the length of the first DMRS symbol sequence is equal to the length of the PTRS group.

(3) Function of the DMRS symbol sequence

The DMRS basic symbol sequence in the DMRS symbol sequence may be used for channel estimation. Optionally, when the CP and/or the CS of the DMRS basic symbol sequence are/is adjacent to the data symbol, a part or all of the CP and/or the CS may be used for phase noise estimation, that is, a part of DMRS symbols may be equivalent to PTRS symbols, while helps reduce PTRS overheads.

For example, for a case in which the DMRS symbol sequence is continuously distributed in the first symbol sequence, in (b) in FIG. 6, at least a part of the CS may be used for phase noise estimation; and in (c) and (d) in FIG. 6, at least a part of the CP may be used for phase noise estimation.

For another example, for a case in which the DMRS symbol sequence is discretely distributed in the first symbol sequence, in (a) and (b) in FIG. 7, at least a part of the CP located at the tail may be used for phase noise estimation; in (c) in FIG. 7, at least the part of the CP and at least a part of the CS may be used for phase noise estimation; in (d) in FIG. 7, at least a part of the CP located at the tail and at least the part of the CS may be used for phase noise estimation; in (e) in FIG. 7, at least the part of the CP and at least the part of the CS may be used for phase noise estimation; and in (f) of FIG. 7, at least a part of the CS located at the head and at least the part of the CP may be used for phase noise estimation.

**(4)** Specific implementation in which the terminal device generates the first symbol sequence

The terminal device may map the DMRS symbol sequence to a corresponding location based on the location of the DMRS symbol sequence in the first symbol sequence, and map the data symbol (and the PTRS symbol) to another location of the first symbol sequence, to generate the first symbol sequence. For an implementation of mapping the PTRS symbol by the terminal device, refer to the following description about the PTRS.

There may be a plurality of specific implementations in which the terminal device generates the first symbol sequence. Two possible implementations are described herein.

**First implementation:** The network device may send first information to the terminal device, where the first information indicates a location of the DMRS symbol sequence in the first symbol sequence. Correspondingly, the terminal device may generate the first symbol sequence based on the first information.

Discrete distribution is used as an example. The first information may include at least one of the following: the number of symbols in the first DMRS symbol sequence; the number of symbols in the second DMRS symbol sequence; a first index value, where the first index value is associated with the number of symbols in the first DMRS symbol sequence and/or the number of symbols in the second DMRS symbol sequence; a location index of the first DMRS symbol sequence in the first symbol sequence; a location index of the second DMRS symbol sequence in the first symbol sequence; and a second index value, where the second index value is associated with the location index of the first DMRS symbol sequence in the first symbol sequence and/or the location index of the second DMRS symbol sequence in the first symbol sequence.

It may be understood that the location of the DMRS symbol sequence in the first symbol sequence may be predefined in a protocol. For example, the protocol predefines that the location of the DMRS symbol sequence in the first symbol sequence is a case shown in FIG. 6 or FIG. 7. In this case, the network device may alternatively not need to send the first information.

**Second implementation:** The terminal device may generate a third symbol sequence, where the third symbol sequence includes the DMRS symbol sequence, and the DMRS symbol sequence is continuously distributed in the third symbol sequence. Further, the terminal device may perform a cyclic shift on the third symbol sequence to obtain the first symbol sequence.

Optionally, the network device sends third information to the terminal device, where the third information indicates a location of the DMRS symbol sequence in the third symbol sequence. For example, the third information may include at least one of the following: a location index of the DMRS symbol sequence in the third symbol sequence; and a third index value, where the third index value is associated with the location index of the DMRS symbol sequence in the third symbol sequence. Further, the terminal device may generate the third symbol sequence based on the third information. Alternatively, the location of the DMRS symbol sequence in the third symbol sequence is predefined in a protocol. In this case, the network device may alternatively not need to send the third information.

Optionally, the network device sends second information to the terminal device, where the second information indicates a first cyclic shift value, and the terminal device may perform the cyclic shift on the third symbol sequence based on the first cyclic shift value, to obtain the first symbol sequence. Alternatively, the first cyclic shift value may be predefined in a protocol. In this case, the network device may alternatively not need to send the second information.

A value of the first cyclic shift value may not be limited in embodiments of this application. For example, when the DMRS symbol sequence is located at a head of the third symbol sequence, the first cyclic shift value may be equal to the length of the second DMRS symbol sequence.

For example, the DMRS symbol sequence is located at the head of the third symbol sequence, as shown in (a) in FIG. 6. In this case, when the first cyclic shift value is equal to the length of the CP of the DMRS basic symbol sequence, for the first symbol sequence obtained after the terminal device performs the cyclic shift on the third symbol sequence, refer to (a) in FIG. 7. When the first cyclic shift value is equal to a length of the part of the CP of the DMRS basic symbol sequence, for the first symbol sequence obtained after the terminal device performs the cyclic shift on the third symbol sequence, refer to (b) in FIG. 7.

For another example, the DMRS symbol sequence is located at the head of the third symbol sequence, as shown in (b) in FIG. 6. In this case, when the first cyclic shift value is equal to the length of the CP of the DMRS basic symbol sequence, for the first symbol sequence obtained after the terminal device performs the cyclic shift on the third symbol sequence, refer to (c) in FIG. 7. When the first cyclic shift value is equal to a length of the part of the CP of the DMRS basic symbol sequence, for the first symbol sequence obtained after the terminal device performs the cyclic shift on the third symbol sequence, refer to (d) in FIG. 7. When the first cyclic shift value is equal to a sum of a length of the DMRS basic symbol sequence and the length of the CP, for the first symbol sequence obtained after the terminal device performs the cyclic shift on the third symbol sequence, refer to (e) in FIG. 7. When the first cyclic shift value is equal to a sum of the length of the DMRS basic symbol sequence, the length of the CP, and a length of the part of the CS, for the first symbol sequence obtained after the terminal device performs the cyclic shift on the third symbol sequence, refer to (f) in FIG. 7.

It may be understood that the second implementation is described by using an example in which the terminal device performs the cyclic shift before the DFT. In another possible embodiment, the terminal device may also perform the cyclic shift after the IFFT. For example, after generating the third symbol sequence, the terminal device may perform the DFT, mapping to the RE, and the IFFT on the third symbol sequence to obtain a fourth symbol sequence, and perform the cyclic shift on the fourth symbol sequence based on a second cyclic shift value to obtain a fifth symbol sequence (the fifth symbol sequence is the same as a second symbol sequence below). The second cyclic shift value may be determined based on the first cyclic shift value, a number of samples of the FFT, and $M_{sc}^{PUSCH}$. For example, the second cyclic shift value may be equal to $floor\{first\ cyclic\ shift\ value*NFFT\_size/M_{sc}^{PUSCH}\}$, where floor{} represents rounding down, and NFFT_size represents the number of samples of the FFT.

For example, the second cyclic shift value may be indicated by the network device to the terminal device, or may be predefined in a protocol. For details, refer to descriptions of the first cyclic shift value.

**(5)** PTRS mapping

As described above, the first symbol sequence may include at least one PTRS group or at least one PTRS symbol. The following provides descriptions with reference to Implementation 1 and Implementation 2.

**(5.1)** Implementation 1

In Implementation 1, the first symbol sequence may include M PTRS groups, and a location that is of a PTRS symbol in the M PTRS groups and that is in the first symbol sequence is determined based on a first value. The first value is determined based on the number of REs in the scheduled bandwidth and a number of REs corresponding to the DMRS symbol sequence. For example, the first value is equal to the number of REs in the scheduled bandwidth minus the number of REs corresponding to the DMRS symbol sequence. Because the number of REs in the scheduled bandwidth is equal to the number of symbols in the first symbol sequence, the number of REs corresponding to the DMRS symbol sequence is equal to the number of symbols in the DMRS symbol sequence. Therefore, it may also be described as follows: The first value is equal to a number of symbols in the first symbol sequence other than the DMRS symbol sequence, that is, the first value is equal to $M_{sc}^{PUSCH} - D$.

An explanation is as follows: In the implementations shown in Table 1 and Table 2, a length that can be occupied by the PTRS is $M_{sc}^{PUSCH}$. However, in this embodiment of this application, because the pre-DFT DMRS is introduced, the length that can be occupied by the PTRS changes, that is, the length that can be occupied by the PTRS changes from $M_{sc}^{PUSCH}$ to $M_{sc}^{PUSCH} - D$.

For example, locations of the M PTRS groups in the first symbol sequence meet the following rule: Two of the M PTRS groups are respectively located at a head and a tail of a remaining symbol sequence other than the DMRS symbol sequence in the first symbol sequence, and other PTRS groups other than the two PTRS groups of the M PTRS groups are equally spaced between the two PTRS groups, or the M PTRS groups are equally spaced in the remaining symbol sequence.

The following describes three possible implementations of location mapping of the M PTRS groups based on Example 1 to Example 3.

**Example 1**

In Example 1, M may be equal to P, P is a $k^{th}$ power of 2, and k is a positive integer.

Specifically, after generating the DMRS symbol sequence, the terminal device may determine, based on the scheduled bandwidth and the number of symbols in the DMRS symbol sequence, the first value and $N_{RB'}$ corresponding to the first value (that is, $N_{RB'}=(M_{sc}^{PUSCH} - D)/12$), and then determine the PTRS pattern based on $N_{RB'}$ and Table 3, that is, the number of PTRS groups and the number of PTRS symbols in the PTRS group. For $N_{RBi}$ in Table 3, refer to the description of Table 1. Further, after determining the number of PTRS groups and the number of PTRS symbols in the PTRS group that correspond to the first value, the terminal device may determine the location index of the PTRS based on Table 4.

Table 3: Correspondence between $N_{RB'}$ and the PTRS pattern

| $N_{RB'}$ | Number of PTRS groups | Number of PTRS samples in the group |
|---|---|---|
| $N_{RB0}{\le}N_{RB'}{<}N_{RB1}$ | 2 | 2 |
| $N_{RB1}{\le}N_{RB'}{<}N_{RB2}$ | 2 | 4 |
| $N_{RB2}{\le}N_{RB'}{<}N_{RB3}$ | 4 | 2 |
| $N_{RB3}{\le}N_{RB'}{<}N_{RB4}$ | 4 | 4 |

(continued)

| N$_{RB'}$ | Number of PTRS groups | Number of PTRS samples in the group |
|---|---|---|
| N$_{RB4}$≤N$_{RB'}$ | 8 | 4 |

Table 4: Location indexes of PTRS samples in the pre-DFT time domain symbol

| Number of PTRS groups | Number of PTRS samples in the group | Location index of the PTRS sample in the pre-DFT time domain symbol |
|---|---|---|
| 2 | 2 | $s\lfloor(M_{sc}^{PUSCH} - D)/4\rfloor + k - 1,$ <br> where s = 1,3; $k$ = 0,1 |
| 2 | 4 | $s(M_{sc}^{PUSCH} - D) + k,$ <br> where <br> $\begin{cases} s = 0 & ; & k = 0,1,2,3 \\ s = 1 & ; & k = -4,-3,-2,-1 \end{cases}$ |
| 4 | 2 | $\lfloor s(M_{sc}^{PUSCH} - D)/8\rfloor + k - 1,$ <br> where s = 1,3,5,7; k = 0,1 |
| 4 | 4 | $s(M_{sc}^{PUSCH} - D)/4 + n + k,$ <br> where <br> $\begin{cases} s = 0 & ; & k = 0,1,2,3; & n = 0 \\ s = 1,2 & ; & k = -2,-1,0,1; & n = \lfloor(M_{sc}^{PUSCH} - D)/8\rfloor \\ s = 4 & ; & k = -4,-3,-2,-1; & n = 0 \end{cases}$ |
| 8 | 4 | $\lfloor s(M_{sc}^{PUSCH} - D)/8\rfloor + n + k,$ <br> where <br> $\begin{cases} s = 0 & ; & k = 0,1,2,3; & n = 0 \\ s = 1,2,3,4,5,6 & ; & k = -2,-1,0,1; & n = \lfloor(M_{sc}^{PUSCH} - D)/16\rfloor \\ s = 8 & ; & k = -4,-3,-2,-1; & n = 0 \end{cases}$ |

For Table 3 and Table 4, an example is provided. When $M_{sc}^{PUSCH} - D{=}16$, if both the number of PTRS groups and the number of PTRS symbols in the PTRS group are 2, the location indexes of the PTRS symbols may be respectively obtained through calculation according to the formula in the first row in Table 4 as follows:

$$1*4+0-1=3;$$

$$1*4+1-1=4;$$

$$3*4+0-1=11;$$

and

$$3*4+1-1=12.$$

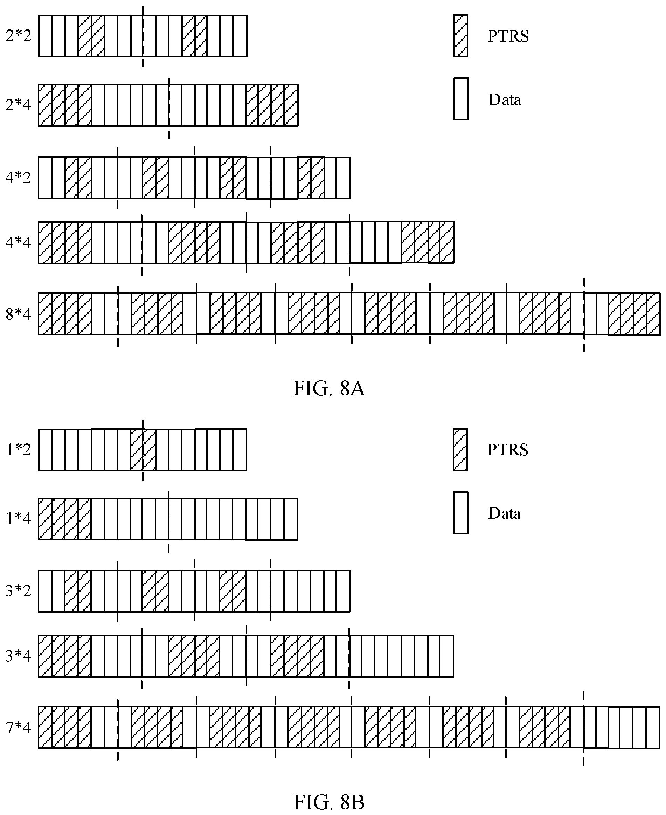

PTRS symbols whose location indexes are 3 and 4 belong to one PTRS group, and PTRS symbols whose location indexes are 11 and 12 belong to one PTRS group. For locations of the PTRS symbols, refer to a first row in FIG. 8A.

When $M_{sc}^{PUSCH} - D{=}20$, if the number of PTRS groups is 2, and the number of PTRS symbols in the PTRS group is 4, for locations of the PTRS symbol, refer to a second row in FIG. 8A.

When $M_{sc}^{PUSCH} - D = 24$, if the number of PTRS groups is 4, and the number of PTRS symbols in the PTRS group is 2, for locations of the PTRS symbol, refer to a third row in FIG. 8A.

When $M_{sc}^{PUSCH} - D = 32$, if the number of PTRS groups is 4, and the number of PTRS symbols in the PTRS group is 4, for locations of the PTRS symbol, refer to a fourth row in FIG. 8A.

When $M_{sc}^{PUSCH} - D = 48$, if the number of PTRS groups is 8, and the number of PTRS symbols in the PTRS group is 4, for locations of the PTRS symbol, refer to a fifth row in FIG. 8A.

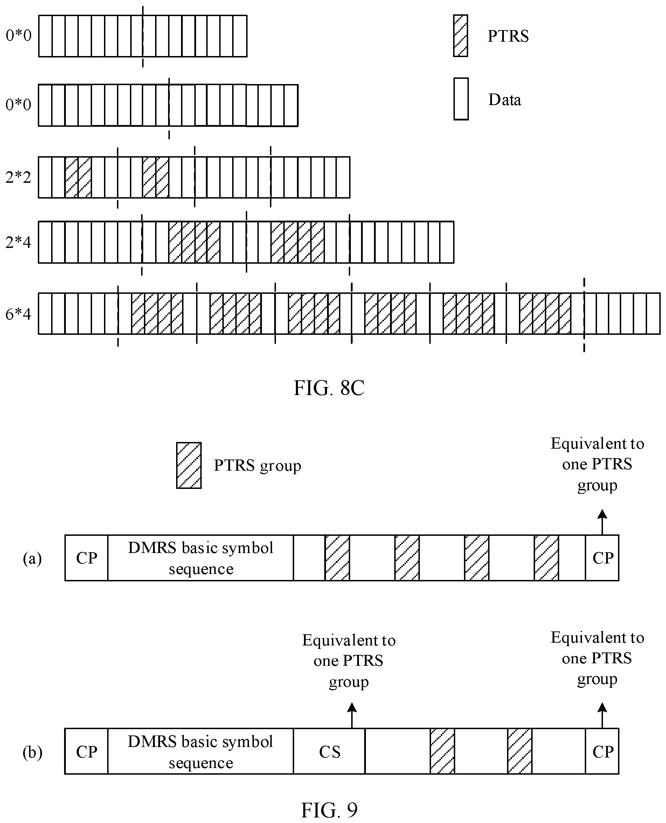

It may be understood that the mapping manner in Example 1 may be applicable to any case in FIG. 6 or FIG. 7. For example, when the location of the DMRS symbol sequence is shown in (b) in FIG. 7 (an example in which the length of the CP at the tail of the first symbol sequence is equal to the length of the PTRS group is used), the locations of the M PTRS groups may be shown in (a) in FIG. 9.

**Example 2**

In Example 2, M may be equal to P-1.

After generating the DMRS symbol sequence, the terminal device may determine, based on the scheduled bandwidth and the number of symbols in the DMRS symbol sequence, the first value and $N_{RB'}$ corresponding to the first value (that is, $N_{RB'} = (M_{sc}^{PUSCH} - D)/12$), and then determine the PTRS pattern based on $N_{RB'}$ and Table 5, that is, the number of PTRS groups and the number of PTRS samples in the group. Further, after determining the number of PTRS groups and the number of PTRS samples in the group that correspond to the first value, the terminal device may determine the location index of the PTRS based on Table 6.

Table 5: Correspondence between $N_{RB'}$ and the PTRS pattern

| $N_{RB'}$ | Number of PTRS groups | Number of PTRS samples in the group |
|---|---|---|
| $N_{RB0} \leq N_{RB'} < N_{RB1}$ | 1 | 2 |
| $N_{RB1} \leq N_{RB'} < N_{RB2}$ | 1 | 4 |
| $N_{RB2} \leq N_{RB'} < N_{RB3}$ | 3 | 2 |
| $N_{RB3} \leq N_{RB'} < N_{RB4}$ | 3 | 4 |
| $N_{RB4} \leq N_{RB'}$ | 7 | 4 |

Table 6: Location indexes of PTRS samples in the pre-DFT time domain symbol

| Number of PTRS groups | Number of PTRS samples in the group | Location index of the PTRS sample in the pre-DFT time domain symbol |
|---|---|---|
| 1 | 2 | $s \lfloor (M_{sc}^{PUSCH} - D)/4 \rfloor + k - 1,$ where $s = 2$; and $k = 0,1$ |
| 1 | 4 | $s(M_{sc}^{PUSCH} - D) + k,$ where $s = 0$; $k = 0,1,2,3$ |
| 3 | 2 | $\lfloor s(M_{sc}^{PUSCH} - D)/8 \rfloor + k - 1,$ where $s = 1,3,5$; $k = 0,1$ |
| 3 | 4 | $s(M_{sc}^{PUSCH} - D)/4 + n + k,$ where $\begin{cases} s = 0; \ k = 0,1,2,3; \ n = 0 \\ s = 1,2; \ k = -2,-1,0,1; \ n = \lfloor (M_{sc}^{PUSCH} - D)/8 \rfloor \end{cases}$ |

(continued)

| Number of PTRS groups | Number of PTRS samples in the group | Location index of the PTRS sample in the pre-DFT time domain symbol |
|---|---|---|
| 7 | 4 | $\lfloor s(M_{sc}^{PUSCH} - D)/8 \rfloor + n + k,$ <br> where <br> $\begin{cases} s = 0; \ k = 0,1,2,3; \ n = 0 \\ s = 1,2,3,4,5,6; \ k = -2,-1,0,1; \ n = \lfloor (M_{sc}^{PUSCH} - D)/16 \rfloor \end{cases}$ |

For Table 5 and Table 6, an example is provided. When $M_{sc}^{PUSCH} - D = 16$, if the number of PTRS groups is 1, and the number of PTRS symbols in the PTRS group is 2, the location indexes of the PTRS symbols may be respectively obtained through calculation according to the formula in the first row in Table 6 as follows:

$$2*4+0-1=7;$$

and

$$2*4+1-1=8.$$

PTRS symbols whose location indexes are 7 and 8 belong to one PTRS group. For locations of the PTRS symbols, refer to a first row in FIG. 8B.

When $M_{sc}^{PUSCH} - D = 20$, if the number of PTRS groups is 1, and the number of PTRS symbols in the PTRS group is 4, for locations of the PTRS symbol, refer to a second row in FIG. 8B.

When $M_{sc}^{PUSCH} - D = 24$, if the number of PTRS groups is 3, and the number of PTRS symbols in the PTRS group is 2, for locations of the PTRS symbol, refer to a third row in FIG. 8B.

When $M_{sc}^{PUSCH} - D = 32$, if the number of PTRS groups is 3, and the number of PTRS symbols in the PTRS group is 4, for locations of the PTRS symbol, refer to a fourth row in FIG. 8B.

When $M_{sc}^{PUSCH} - D = 48$, if the number of PTRS groups is 7, and the number of PTRS symbols in the PTRS group is 4, for locations of the PTRS symbol, refer to a fifth row in FIG. 8B.

It may be understood that in Example 2, it is assumed that at least a part of the DMRS symbol sequence may be equivalent to one PTRS group. Therefore, compared with Example 1, one PTRS group is reduced in Example 2. Example 2 may be applicable to any case in FIG. 7 or any case other than (a) in FIG. 6. For example, when the location of the DMRS symbol sequence is shown in (b) in FIG. 7 (an example in which the length of the CP at the tail of the first symbol sequence is equal to the length of the PTRS group is used), the locations of the M PTRS groups may be shown in (a) in FIG. 9.

**Example 3**

In Example 3, M may be equal to P-2.

After generating the DMRS symbol sequence, the terminal device may determine, based on the scheduled bandwidth and the number of symbols in the DMRS symbol sequence, the first value and $N_{RB'}$ corresponding to the first value (that is, $N_{RB'} = (M_{sc}^{PUSCH} - D)/12$), and then determine the PTRS pattern based on $N_{RB'}$ and Table 7, that is, the number of PTRS groups and the number of PTRS samples in the group. Further, after determining the number of PTRS groups and the number of PTRS samples in the group that correspond to the first value, the terminal device may determine the location index of the PTRS based on Table 8.

Table 7: Correspondence between PTRS patterns

| $N_{RB'}$ | Number of PTRS groups | Number of PTRS samples in the group |
|---|---|---|
| $N_{RB0} \leq N_{RB'} < N_{RB1}$ | 0 | 0 |
| $N_{RB1} \leq N_{RB'} < N_{RB2}$ | 0 | 0 |
| $N_{RB2} \leq N_{RB'} < N_{RB3}$ | 2 | 2 |

(continued)

| $N_{RB'}$ | Number of PTRS groups | Number of PTRS samples in the group |
|---|---|---|
| $N_{RB3} \leq N_{RB'} < N_{RB4}$ | 2 | 4 |
| $N_{RB4} \leq N_{RB'}$ | 6 | 4 |

Table 8: Specific locations of PTRSs in a time domain symbol

| Number of PTRS groups | Number of PTRS samples in the group | Location index of the PTRS sample in the pre-DFT time domain symbol |
|---|---|---|
| 0 | 0 | The PTRS is not placed |
| 0 | 0 | The PTRS is not placed |
| 2 | 2 | $\lfloor s(M_{sc}^{PUSCH} - D)/8 \rfloor + k - 1,$ where s = 1,3; k = 0,1 |
| 2 | 4 | $s(M_{sc}^{PUSCH} - D)/4 + n + k,$ where s = 1,2; k = -2, -1,0,1; $n = \lfloor (M_{sc}^{PUSCH} - D)/8 \rfloor$ |
| 6 | 4 | $\lfloor s(M_{sc}^{PUSCH} - D)/8 \rfloor + n + k,$ where s = 1,2,3,4,5; k = -2, -1,0,1; $n = \lfloor (M_{sc}^{PUSCH} - D)/16 \rfloor$ |

For Table 7 and Table 8, an example is provided. When $M_{sc}^{PUSCH} - D = 16$ or 20, if the number of PTRS groups is 0, the PTRS may not be placed, as shown in a first row and a second row in FIG. 8C.

For example, when $M_{sc}^{PUSCH} - D = 24$, if the number of PTRS groups is 2, and the number of PTRS symbols in the PTRS group is 2, the location indexes of the PTRS symbols may be respectively obtained through calculation according to the formula in the third row in Table 8 as follows:

$$1*24/8+0-1=2;$$

$$1*24/8+1-1=3;$$

$$3*24/8+0-1=8;$$

and

$$3*24/8+1-1=9.$$

PTRS symbols whose location indexes are 2 and 3 belong to one PTRS group, and PTRS symbols whose location indexes are 8 and 9 belong to one PTRS group. For locations of the PTRS symbols, refer to a third row in FIG. 8C.

When $M_{sc}^{PUSCH} - D = 32$, if the number of PTRS groups is 2, and the number of PTRS symbols in the PTRS group is 4, for locations of the PTRS symbol, refer to a fourth row in FIG. 8C.

When $M_{sc}^{PUSCH} - D = 48$, if the number of PTRS groups is 6, and the number of PTRS symbols in the PTRS group is 4, for locations of the PTRS symbol, refer to a fifth row in FIG. 8C.

It may be understood that, in another example, two rows in which the number of PTRS groups is 0 (that is, M=0) may alternatively be directly deleted from Table 7 and Table 8. In Example 3, it is assumed that at least a part of the DMRS symbol sequence may be equivalent to two PTRS groups. Therefore, compared with Example 1, two PTRS groups are reduced in Example 3. The foregoing example 3 may be applicable to (c), (d), (e), or (f) in FIG. 7. For example, when the location of the DMRS symbol sequence is shown in (d) in FIG. 7 (an example in which the length of the CP at the tail of the first symbol sequence is equal to the length of the PTRS group is used), the locations of the M PTRS groups may be shown in (b) in FIG. 9.

**(5.2)** Implementation 2

The first symbol sequence includes X PTRS symbols of N PTRS symbols, and a second value is equal to the number of symbols in the first symbol sequence, that is, the second value is equal to $M_{sc}^{PUSCH}$. Both N and X are positive integers.

For example, after generating the DMRS symbol sequence, the terminal device may determine, based on the scheduled bandwidth, the second value and $N_{RB}$ corresponding to the second value (that is, $N_{RB}=(M_{sc}^{PUSCH})/12$), and then determine the PTRS pattern based on $N_{RB}$ and Table 1, that is, the number of PTRS groups and the number of PTRS samples in the group. N is equal to a product of the number of PTRS groups and the number of PTRS samples in the group. In addition, the terminal device may determine location indexes of the N PTRS symbols (or a number N of PTRS samples) in the first symbol sequence based on Table 2.

Further, for each of the N PTRS symbols, if a location of the PTRS symbol overlaps a location of a DMRS symbol, the terminal device may not map the PTRS symbol (or may not place the PTRS symbol).

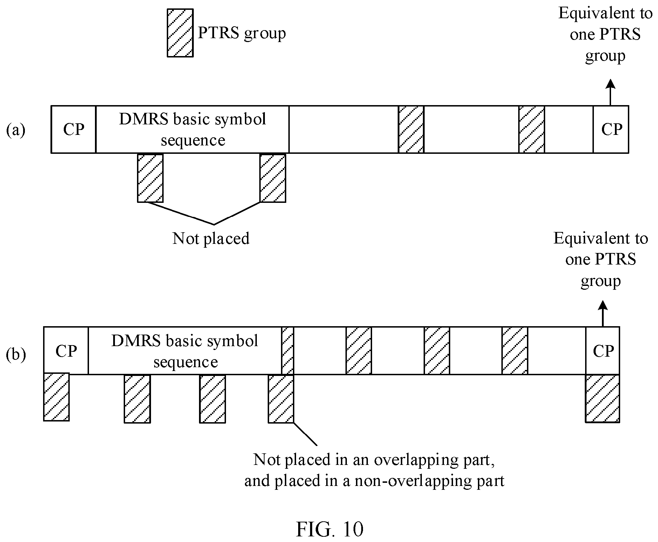

For example, refer to (a) in FIG. 10. Because locations of PTRS symbols in first two PTRS groups overlap the location of the DMRS symbol sequence, the terminal device may not place PTRS symbols in the first two PTRSs. In other words, X is less than or equal to N, and a location of a PTRS symbol other than the X PTRS symbols of N PTRS groups overlaps the location of the DMRS symbol sequence.

For another example, refer to (b) in FIG. 10. Because a second PTRS group overlaps the DMRS basic symbol sequence, the terminal device may not place a PTRS symbol in an overlapping part, and may place a PTRS symbol in a non-overlapping part (for example, if the second PTRS group includes four PTRS symbols, and first two PTRS symbols overlap the DMRS symbol, the first two PTRS symbols may not be placed, but last two PTRS symbols may be placed).

It may be understood that in specific implementation, the terminal device may perform PTRS mapping in a manner in Example 1, Example 2, or Example 3 in Implementation 1, or may perform PTRS mapping based on Implementation 2. A specific manner may be predefined in a protocol, or may be indicated by the network device to the terminal device. For example, the protocol may predefine Table 3 and Table 4, and predefine that the terminal device performs PTRS mapping in the manner in Example 1, the protocol may predefine Table 5 and Table 6, and predefine that the terminal device performs PTRS mapping in the manner in Example 2, or the protocol may predefine Table 7 and Table 8, and predefine that the terminal device performs PTRS mapping in the manner in Example 3. Alternatively, the protocol may predefine that the terminal device performs PTRS mapping in an existing manner, and when the location of the PTRS symbol overlaps the location of the DMRS symbol, the PTRS symbol is not placed.

**S502:** The terminal device processes the first symbol sequence to generate the second symbol sequence.

Herein, the processing performed by the terminal device on the first symbol sequence may include a DFT operation performed by the terminal device on the first symbol sequence, and optionally, further include mapping to the RE, the IFFT, and the like.

**S503:** The terminal device outputs the second symbol sequence (for example, sends the second symbol sequence), and correspondingly, the network device receives the second symbol sequence.

For example, the second symbol sequence is a post-IFFT symbol sequence. The terminal device may perform a cyclic shift to supplement the second symbol sequence, for example, add a CP of the second symbol sequence, and send a final symbol sequence to the network device. Correspondingly, the network device may receive the final symbol sequence.

**S504:** The network device processes the second symbol sequence to obtain the first symbol sequence.

Herein, the processing performed by the terminal device on the second symbol sequence may include an IDFT operation performed by the terminal device on the second symbol sequence, and optionally, further include the IFFT, demapping from the RE, and the like.

**S505:** The network device performs phase noise estimation based on at least the part of the DMRS symbol sequence.

Herein, as described in the foregoing "where, as described in the foregoing function of the symbol sequence", at least the part of the DMRS symbol sequence may be used for phase noise estimation. Therefore, the network device may perform phase noise estimation based on at least the part of the DMRS symbol sequence (for example, at least the part of the first DMRS symbol sequence and/or at least the part of the second DMRS symbol sequence).

For example, when the terminal device performs PTRS mapping in the manner shown in Example 1 or Example 2 in Implementation 1, at least the part of the DMRS symbol sequence (for example, at least the part of the first DMRS symbol sequence and/or at least the part of the second DMRS symbol sequence) may be equivalent to a PTRS. That is, the network device may perform phase noise estimation based on at least the part of the DMRS symbol sequence. Specifically, in (a) in FIG. 9, the network device may equate the CP at the tail of the first symbol sequence to one PTRS group, and then perform phase noise estimation based on four PTRS groups and the CP at the tail of the first symbol sequence.

For example, when the terminal device performs PTRS mapping in the manner shown in Example 3 in Implementation 1 at least the part of the DMRS symbol sequence (for example, at least the part of the first DMRS symbol sequence and at least the part of the second DMRS symbol sequence) may be equivalent to a PTRS. That is, the network device may perform phase noise estimation based on at least the part of the DMRS symbol sequence. Specifically, in (b) in FIG. 9, for example, if the CS includes four symbols, and the PTRS group includes two symbols, the network device may equate last two symbols of the CS to one PTRS group, or may equate four symbols of the CS to one PTRS group. In addition, the network device may further equate the CP at the tail of the first symbol sequence to one PTRS group, and then perform phase noise estimation based on the two PTRS groups, and at least the part of the CS and/or the CP at the tail of the first symbol sequence.

For another example, when the terminal device performs PTRS mapping in the manner in Implementation 2, the network device may perform phase noise estimation based on at least the part of the DMRS symbol sequence. Specifically, in (a) in FIG. 10, the network device may perform phase noise estimation based on two PTRS groups and the CP at the tail of the first symbol sequence. In (b) in FIG. 10, the network device may perform phase noise estimation based on four PTRS groups (a number of PTRS symbols in a first PTRS group is less than a number of PTRS symbols in the other PTRS group) and the CP at the tail of the first symbol sequence.

In this embodiment of this application, because the pre-DFT symbol sequence (namely, the first symbol sequence) may include the DMRS symbol sequence, a DMRS symbol and a data symbol are multiplexed into a same time domain symbol in a time-division manner. This can effectively reduce a PAPR and improve data transmission performance, and can also effectively improve channel estimation performance, which facilitates correct demodulation of data. Further, when the first symbol sequence includes the DMRS symbol sequence, the location of the DMRS symbol sequence in the first symbol sequence is set, so that at least the part of the DMRS sequence (for example, at least the part of the first DMRS symbol sequence and/or at least the part of the second DMRS symbol sequence) can be used for phase noise estimation, which helps reduce PTRS overheads and improve phase noise estimation performance.

It may be understood that this embodiment of this application is described by using an example in which the first symbol sequence includes one DMRS symbol sequence (reference is made to the foregoing description, and the DMRS symbol sequence includes the DMRS basic symbol sequence, and further includes the CP and/or the CS of the DMRS basic symbol sequence). In another possible embodiment, the first symbol sequence may include a plurality of DMRS symbol sequences. For example, the first symbol sequence includes two DMRS symbol sequences (that is, a DMRS symbol sequence 1 and a DMRS symbol sequence 2). The DMRS symbol sequence 1 includes a DMRS basic symbol sequence 1, and may further include a CP 1 and/or a CS 1 of the DMRS basic symbol sequence 1, and the DMRS symbol sequence 2 includes a DMRS basic symbol sequence 2, and may further include a CP 2 and/or a CS 2 of the DMRS basic symbol sequence 2. When the first symbol sequence includes the plurality of DMRS symbol sequences, for a manner of placing one of the DMRS symbol sequences in the first symbol sequence, refer to the foregoing descriptions in this embodiment of this application. A manner of placing another DMRS symbol sequence in the first symbol sequence may not be limited.

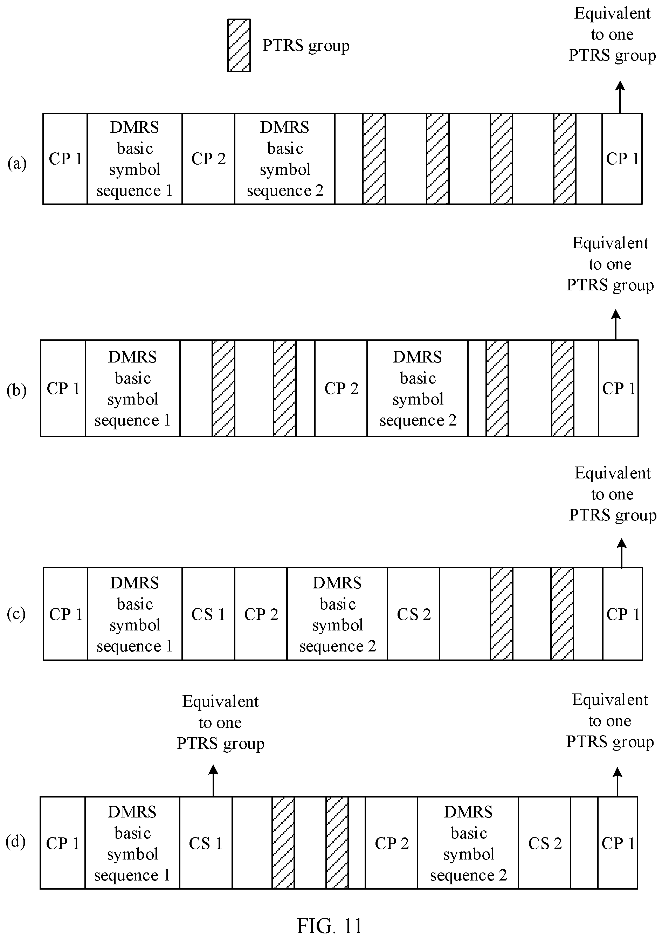

For example, the first symbol sequence includes the DMRS symbol sequence 1 and the DMRS symbol sequence 2. The DMRS symbol sequence 1 includes the DMRS basic symbol sequence 1 and the CP 1 of the DMRS basic symbol sequence 1, and the DMRS symbol sequence 2 includes the DMRS basic symbol sequence 2 and the CP 2 of the DMRS basic symbol sequence 2. In this case, if a manner of placing the DMRS symbol sequence 1 in the first symbol sequence is (b) in FIG. 7, a possible structure of the first symbol sequence may be shown in (a) in FIG. 11, and another possible structure may be shown in (b) in FIG. 11.

For another example, the first symbol sequence includes the DMRS symbol sequence 1 and the DMRS symbol sequence 2. The DMRS symbol sequence 1 includes the DMRS basic symbol sequence 1 and the CP 1 and the CS 1 of the DMRS basic symbol sequence 1, and the DMRS symbol sequence 2 includes the DMRS basic symbol sequence 2 and the CP 2 and the CS 2 of the DMRS basic symbol sequence 2. In this case, if a manner of placing the DMRS symbol sequence 1 in the first symbol sequence is (d) in FIG. 7, a possible structure of the first symbol sequence may be shown in (c) in FIG. 11, and another possible structure may be shown in (d) in FIG. 11. In addition, for (c) in FIG. 11, a receive end (for example, the network device) may perform phase noise estimation based on two PTRS groups and the CP 1 at the tail of the first symbol sequence, and optionally, may alternatively perform phase noise estimation based on a part or all of the CS 2. For (d) in FIG. 11, the receive end (for example, the network device) may perform phase noise estimation based on two PTRS groups, a part or all of the CS 1, and the CP 1 at the tail of the first symbol sequence, and optionally, may alternatively perform phase noise estimation based on a part or all of the CP 2 and a part or all of the CS 2.

In addition, a length of a cyclic sequence (including the CP and/or the CS) of the DMRS basic symbol sequence is not limited in embodiments of this application. In a possible implementation, a transmit end (for example, the terminal device) may determine the length of the cyclic sequence of the DMRS basic symbol sequence based on a first parameter (that is, the length of the cyclic sequence is related to the first parameter). The first parameter may include at least one of the following: a number of valid subcarriers in a scheduled bandwidth, an IFFT length, a modulation and coding scheme (modulation and coding scheme, MCS), a ratio of a number of occupied subcarriers to a number of valid subcarriers, channel state information (channel state information reference signal, CSI), a number of filter orders, and the like.

For example, the terminal device may determine an extension length based on at least one of a ratio of the number of valid subcarriers to the IFFT length, the MCS, and the ratio of the number of occupied subcarriers to the number of valid subcarriers, and then determine the length of the cyclic sequence based on a first length, the number of valid subcarriers, the IFFT length, and the extension length. The first length is a first preset value, the first preset value is a positive integer, and the first preset value may be predefined in a protocol or preconfigured by the network device. For example, the length of the cyclic sequence satisfies the following formula:

$$L=floor(a*M/N)+2Q \text{ or } L=ceiling(a*M/N)+2Q$$

L represents the length of the cyclic sequence, a represents the first length, M represents the number of valid subcarriers, N represents the IFFT length, ceiling represents rounding up, and floor represents rounding down. For example, if a=144, M=256, N=2048, and Q=2, L=ceiling(144*256/2048)+2*2=22.

In this way, when determining the length of the cyclic sequence, the terminal device considers parameters in different dimensions such as the number of valid subcarriers in the scheduled bandwidth, the IFFT length, the MCS, the ratio of the number of occupied subcarriers to the number of valid subcarriers, the CSI, and the number of filter orders. This helps reduce multipath delay interference in a single carrier system based on the cyclic sequence, and improve transmission performance of the single carrier system.

The foregoing mainly describes, from the perspective of interaction between the network device and the terminal device, the solutions provided in embodiments of this application. It may be understood that to implement the foregoing functions, the network device and the terminal device may include corresponding hardware structures and/or software modules for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the network device and the terminal device may be divided into functional units based on the foregoing method examples. For example, each functional unit may be obtained through division based on each corresponding function, or two or more functions may be integrated into one unit. The integrated unit may be implemented in a form of hardware, or may be implemented in a form of a software functional unit.

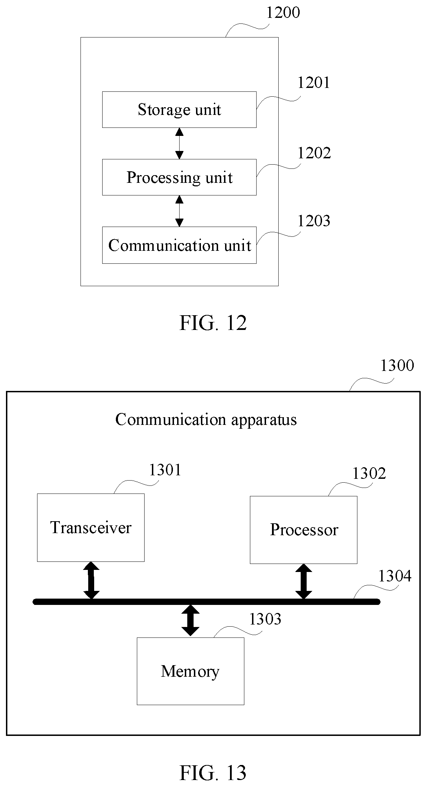

When an integrated unit is used, FIG. 12 is a possible example block diagram of an apparatus according to an embodiment of this application. As shown in FIG. 12, the apparatus 1200 may include a processing unit 1202 and a communication unit 1203. The processing unit 1202 is configured to control and manage an action of the apparatus 1200. The communication unit 1203 is configured to support communication between the apparatus 1200 and another device. Optionally, the communication unit 1203 is also referred to as a transceiver unit, and may include a receiving unit and/or a sending unit, respectively configured to perform a receiving operation and a sending operation. The apparatus 1200 may further include a storage unit 1201, configured to store program code and/or data of the apparatus 1200.

(1) The apparatus 1200 may be the terminal device in the foregoing embodiment. The processing unit 1202 may support the apparatus 1200 in performing actions of the terminal device in the foregoing method examples. Alternatively, the processing unit 1202 mainly performs internal actions of the terminal device in the method examples, and the communication unit 1203 may support communication between the apparatus 1200 and another device.

For example, in an embodiment, the processing unit 1202 is configured to: generate a first symbol sequence, where the first symbol sequence includes a demodulation reference signal DMRS symbol sequence, the DMRS symbol sequence includes a first DMRS symbol sequence and a second DMRS symbol sequence, the first DMRS symbol sequence is located at a head of the first symbol sequence, and the second DMRS symbol sequence is located at a tail of the first symbol sequence; process the first symbol sequence to obtain a second symbol sequence, where the processing includes transform precoding; and output the second symbol sequence.

In a possible design, at least a part of the first DMRS symbol sequence and/or at least a part of the second DMRS symbol sequence are/is used for phase noise estimation.

In a possible design, the first symbol sequence further includes M phase tracking reference signal PTRS groups, a location that is of a PTRS symbol in the M PTRS groups and that is in the first symbol sequence is determined based on a first value, and the first value is equal to a number of REs in a scheduled bandwidth minus a number of REs corresponding to the DMRS symbol sequence. M is equal to P, P-1, or P-2, P is a $k^{th}$ power of 2, and k is a positive integer.

In a possible design, when M is equal to P or P-1, at least the part of the first DMRS symbol sequence and/or at least the part of the second DMRS symbol sequence are/is used for phase noise estimation, or when M is equal to P-2, at least the part of the first DMRS symbol sequence and at least the part of the second DMRS symbol sequence are used for phase noise estimation.

In a possible design, the first symbol sequence further includes X PTRS symbols of N PTRS symbols, locations of the N PTRS symbols are determined based on a second value, the second value is equal to a number of REs in a scheduled bandwidth, and both N and X are positive integers. A location of a PTRS symbol other than the X PTRS symbols of the N PTRS symbols overlaps a location of the DMRS symbol sequence.

In a possible design, the first DMRS symbol sequence includes a DMRS basic symbol sequence, and the second DMRS symbol sequence includes a cyclic prefix CP of the DMRS basic symbol sequence; or the first DMRS symbol sequence includes the DMRS basic symbol sequence and one part of the CP, and the second DMRS symbol sequence includes the other part of the CP; or the first DMRS symbol sequence includes the DMRS basic symbol sequence and a cyclic suffix CS of the DMRS basic symbol sequence, and the second DMRS symbol sequence includes the CP; or the first DMRS symbol sequence includes the DMRS basic symbol sequence, one part of the CP, and the CS, and the second DMRS symbol sequence includes the other part of the CP; or the first DMRS symbol sequence includes the CS, and the second DMRS symbol sequence includes the CP and the DMRS basic symbol sequence; or the first DMRS symbol sequence includes one part of the CS, and the second DMRS symbol sequence includes the CP, the DMRS basic symbol sequence, and the other part of the CS.

In a possible design, a number of symbols in the first DMRS symbol sequence is equal to a number of PTRS symbols in one PTRS group in the first symbol sequence, or a number of symbols in the second DMRS symbol sequence is equal to the number of PTRS symbols in the PTRS group.

In a possible design, the communication unit 1203 is configured to receive first information from a network device, where the first information includes at least one of the following: the number of symbols in the first DMRS symbol sequence; the number of symbols in the second DMRS symbol sequence; a first index value, where the first index value is associated with the number of symbols in the first DMRS symbol sequence and/or the number of symbols in the second DMRS symbol sequence; a location index of the first DMRS symbol sequence; a location index of the second DMRS symbol sequence; and a second index value, where the second index value is associated with the location index of the first DMRS symbol sequence and/or the location index of the second DMRS symbol sequence.

In a possible design, the processing unit 1202 is specifically configured to: generate a third symbol sequence, where the third symbol sequence includes the DMRS symbol sequence, and the DMRS symbol sequence is continuously distributed in the third symbol sequence; and perform a cyclic shift on the third symbol sequence to obtain the first symbol sequence.

In a possible design, the communication unit 1203 is configured to receive second information from the network device, where the second information indicates a cyclic shift value. The processing unit 1202 is configured to perform the cyclic shift on the third symbol sequence based on the cyclic shift value, to obtain the first symbol sequence.

(2) The apparatus 1200 may be the network device in the foregoing embodiment. The processing unit 1202 may support the apparatus 1200 in performing actions of the network device in the foregoing method examples. Alternatively, the processing unit 1202 mainly performs internal actions of the network device in the method examples, and the communication unit 1203 may support communication between the apparatus 1200 and another device.

For example, in an embodiment, the communication unit 1203 is configured to receive a second symbol sequence. The processing unit 1202 is configured to: process the second symbol sequence to obtain a first symbol sequence, where the processing includes inverse transform precoding, the first symbol sequence includes a DMRS symbol sequence, the DMRS symbol sequence includes a first DMRS symbol sequence and a second DMRS symbol sequence, the first DMRS symbol sequence is located at a head of the first symbol sequence, and the second DMRS symbol sequence is located at a tail of the first symbol sequence; and perform phase noise estimation based on at least a part of the first DMRS symbol sequence and/or at least a part of the second DMRS symbol sequence.

In a possible design, the first symbol sequence further includes M phase tracking reference signal PTRS groups, a location that is of a PTRS symbol in the M PTRS groups and that is in the first symbol sequence is determined based on a first value, and the first value is equal to a number of REs in a scheduled bandwidth minus a number of REs corresponding to the DMRS symbol sequence. M is equal to P, P-1, or P-2, P is a $k^{th}$ power of 2, and k is a positive integer.

In a possible design, the processing unit 1202 is specifically configured to: when M is equal to P or P-1, perform phase noise estimation based on at least the part of the first DMRS symbol sequence and/or at least the part of the second DMRS symbol sequence, or when M is equal to P-2, perform phase noise estimation based on at least the part of the first DMRS symbol sequence and at least the part of the second DMRS symbol sequence.

In a possible design, the first symbol sequence further includes X PTRS symbols of N PTRS symbols, locations of the N PTRS symbols are determined based on a second value, the second value is equal to a number of REs in a scheduled bandwidth, and both N and X are positive integers. A location of a PTRS symbol other than the X PTRS symbols of the N PTRS symbols overlaps a location of the DMRS symbol sequence.

In a possible design, the first DMRS symbol sequence includes a DMRS basic symbol sequence, and the second DMRS symbol sequence includes a cyclic prefix CP of the DMRS basic symbol sequence; or the first DMRS symbol sequence includes the DMRS basic symbol sequence and one part of the CP, and the second DMRS symbol sequence includes the other part of the CP; or the first DMRS symbol sequence includes the DMRS basic symbol sequence and a cyclic suffix CS of the DMRS basic symbol sequence, and the second DMRS symbol sequence includes the CP; or the first DMRS symbol sequence includes the DMRS basic symbol sequence, one part of the CP, and the CS, and the second DMRS symbol sequence includes the other part of the CP; or the first DMRS symbol sequence includes the CS, and the second DMRS symbol sequence includes the CP and the DMRS basic symbol sequence; or the first DMRS symbol sequence includes one part of the CS, and the second DMRS symbol sequence includes the CP, the DMRS basic symbol sequence, and the other part of the CS.

In a possible design, a number of symbols in the first DMRS symbol sequence is equal to a number of PTRS symbols in one PTRS group in the first symbol sequence, or a number of symbols in the second DMRS symbol sequence is equal to the number of PTRS symbols in the PTRS group.

In a possible design, the communication unit 1203 is configured to send first information to the terminal device, where the first information includes at least one of the following: the number of symbols in the first DMRS symbol sequence; the number of symbols in the second DMRS symbol sequence; a first index value, where the first index value is associated with the number of symbols in the first DMRS symbol sequence and/or the number of symbols in the second DMRS symbol sequence; a location index of the first DMRS symbol sequence; a location index of the second DMRS symbol sequence; and a second index value, where the second index value is associated with the location index of the first DMRS symbol sequence and/or the location index of the second DMRS symbol sequence.

In a possible design, the communication unit 1203 is configured to send second information to the terminal device, where the second information indicates a cyclic shift value, the cyclic shift value is used to perform a cyclic shift on a third symbol sequence, the third symbol sequence includes the DMRS symbol sequence, and the DMRS symbol sequence is continuously distributed in the third symbol sequence.

It should be understood that division into the units in the foregoing apparatus is merely logical function division. During actual implementation, all or a part of the units may be integrated into one physical entity, or may be physically separated. In addition, all the units in the apparatus may be implemented in a form of software invoked by a processing element, or may be implemented in a form of hardware, or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or a part of the units may be integrated together, or may be implemented independently. The processing element herein may also be referred to as a processor, and may be an integrated circuit having a signal processing capability. In an implementation process, operations in the foregoing method or the foregoing units may be implemented by using an integrated logic circuit of hardware in the processor element, or may be implemented in a form in which the processing element invokes software.

In an example, a unit in any one of the foregoing apparatuses may be one or more integrated circuits configured to implement the foregoing method, for example, one or more application-specific integrated circuits (application-specific integrated circuit, ASIC), one or more microprocessors (digital signal processor, DSP), one or more field-programmable gate arrays (field-programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For another example, the units may be integrated and implemented in a form of a SoC.

The foregoing unit configured for receiving is an interface circuit of the apparatus, and is configured to receive a signal from another apparatus. For example, when the apparatus is implemented in a form of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a form of a chip, the sending unit is an interface circuit that is of the chip and that is configured to send a signal to another chip or apparatus.

Based on the foregoing embodiments, an embodiment of this application further provides a communication apparatus. As shown in FIG. 13, the communication apparatus 1300 may include a transceiver 1301 and a processor 1302. Optionally, the communication apparatus 1300 may further include a memory 1303. The memory 1303 may be disposed inside the communication apparatus 1300, or may be disposed outside the communication apparatus 1300. The processor 1302 may control the transceiver 1301 to receive and send messages and the like.

Specifically, the processor 1302 may be a central processing unit (central processing unit, CPU), a network processor (network processor, NP), or a combination of the CPU and the NP. The processor 1302 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The transceiver 1301, the processor 1302, and the memory 1303 are connected to each other. Optionally, the transceiver 1301, the processor 1302, and the memory 1303 are connected to each other through a bus 1304. The bus 1304 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 13, but this does not mean that there is only one bus or only one type of bus.

In an optional implementation, the memory 1303 is configured to store a program and the like. Specifically, the program may include program code, and the program code includes computer operation instructions. The memory 1303 may include a RAM, and may further include a non-volatile memory (non-volatile memory), for example, one or more disk memories. The processor 1302 executes the application program stored in the memory 1303 to implement the foregoing functions, to implement functions of the communication apparatus 1300.

For example, the communication apparatus 1300 may be the transmit end (for example, the terminal device) in the foregoing embodiments, or may be the receive end (for example, the network device) in the foregoing embodiments.

In an embodiment, when the communication apparatus 1300 implements a function of the transmit end in the foregoing method embodiments, the transceiver 1301 may implement a receiving/sending operation performed by the transmit end in the foregoing method embodiments, and the processor 1302 may implement an operation other than the receiving/sending operation performed by the transmit end in the foregoing method embodiments. Specifically, for related specific descriptions, refer to related descriptions in the foregoing embodiments. Details are not described herein again.

In another embodiment, when the communication apparatus 1300 implements a function of the receive end in the foregoing method embodiments, the transceiver 1301 may implement a receiving/sending operation performed by the receive end in the foregoing method embodiments, and the processor 1302 may implement an operation other than the receiving/sending operation performed by the receive end in the foregoing method embodiments. Specifically, for related specific descriptions, refer to related descriptions in the foregoing embodiments. Details are not described herein again.

Terms "system" and "network" may be used interchangeably in embodiments of this application. "At least one" means one or more, and "a plurality of" means two or more. A term "and/or" describes an association relationship of associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. At least one of the following items (pieces) or a similar expression thereof indicates any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" mentioned in embodiments of this application are used to distinguish between a plurality of objects, but are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

**Claims**

1. A communication method, wherein the method comprises:

generating a first symbol sequence, wherein the first symbol sequence comprises a demodulation reference signal DMRS symbol sequence, the DMRS symbol sequence comprises a first DMRS symbol sequence and a second DMRS symbol sequence, the first DMRS symbol sequence is located at a head of the first symbol sequence, and the second DMRS symbol sequence is located at a tail of the first symbol sequence;
processing the first symbol sequence to obtain a second symbol sequence, wherein the processing comprises transform precoding; and
outputting the second symbol sequence.

2. The method according to claim 1, wherein at least a part of the first DMRS symbol sequence and/or at least a part of the second DMRS symbol sequence are/is used for phase noise estimation.

3. The method according to claim 1 or 2, wherein the first symbol sequence further comprises M phase tracking reference signal PTRS groups, a location that is of a PTRS symbol in the M PTRS groups and that is in the first symbol sequence is determined based on a first value, and the first value is equal to a number of resource elements REs in a scheduled bandwidth minus a number of REs corresponding to the DMRS symbol sequence.

4. The method according to claim 3, wherein M is equal to P, P-1, or P-2, P is a $k^{th}$ power of 2, and k is a positive integer.

5. The method according to claim 1 or 2, wherein the first symbol sequence further comprises X PTRS symbols of N PTRS symbols, locations of the N PTRS symbols are determined based on a second value, the second value is equal to a number of REs in a scheduled bandwidth, and both N and X are positive integers; and
a location of a PTRS symbol other than the X PTRS symbols of the N PTRS symbols overlaps a location of the DMRS symbol sequence.

6. The method according to any one of claims 1 to 5, wherein

the first DMRS symbol sequence comprises a DMRS basic symbol sequence, and the second DMRS symbol sequence comprises a cyclic prefix CP of the DMRS basic symbol sequence; or
the first DMRS symbol sequence comprises the DMRS basic symbol sequence and one part of the CP, and the second DMRS symbol sequence comprises the other part of the CP; or
the first DMRS symbol sequence comprises the DMRS basic symbol sequence and a cyclic suffix CS of the DMRS basic symbol sequence, and the second DMRS symbol sequence comprises the CP; or
the first DMRS symbol sequence comprises the DMRS basic symbol sequence, one part of the CP, and the CS, and the second DMRS symbol sequence comprises the other part of the CP; or
the first DMRS symbol sequence comprises the CS, and the second DMRS symbol sequence comprises the CP and the DMRS basic symbol sequence; or
the first DMRS symbol sequence comprises one part of the CS, and the second DMRS symbol sequence comprises the CP, the DMRS basic symbol sequence, and the other part of the CS.

7. The method according to any one of claims 1 to 6, wherein

a number of symbols in the first DMRS symbol sequence is equal to a number of PTRS symbols in one PTRS group in the first symbol sequence; or
a number of symbols in the second DMRS symbol sequence is equal to the number of PTRS symbols in the PTRS group.

8. The method according to any one of claims 1 to 7, wherein generating the first symbol sequence comprises:
receiving first information from a network device, wherein the first information comprises at least one of the following:

the number of symbols in the first DMRS symbol sequence;
the number of symbols in the second DMRS symbol sequence;
a first index value, wherein the first index value is associated with the number of symbols in the first DMRS symbol sequence and/or the number of symbols in the second DMRS symbol sequence;
a location index of the first DMRS symbol sequence;

a location index of the second DMRS symbol sequence; and
a second index value, wherein the second index value is associated with the location index of the first DMRS symbol sequence and/or the location index of the second DMRS symbol sequence.

9. The method according to any one of claims 1 to 7, wherein generating the first symbol sequence comprises:

generating a third symbol sequence, wherein the third symbol sequence comprises the DMRS symbol sequence, and the DMRS symbol sequence is continuously distributed in the third symbol sequence; and
performing a cyclic shift on the third symbol sequence to obtain the first symbol sequence.

10. The method according to claim 9, wherein performing the cyclic shift on the third symbol sequence to obtain the first symbol sequence comprises:

receiving second information from the network device, wherein the second information indicates a cyclic shift value; and
performing the cyclic shift on the third symbol sequence based on the cyclic shift value to obtain the first symbol sequence.

11. A communication method, wherein the method comprises:

receiving a second symbol sequence;
processing the second symbol sequence to obtain a first symbol sequence, wherein the processing comprises inverse transform precoding, the first symbol sequence comprises a DMRS symbol sequence, the DMRS symbol sequence comprises a first DMRS symbol sequence and a second DMRS symbol sequence, the first DMRS symbol sequence is located at a head of the first symbol sequence, and the second DMRS symbol sequence is located at a tail of the first symbol sequence; and
performing phase noise estimation based on at least a part of the first DMRS symbol sequence and/or at least a part of the second DMRS symbol sequence.

12. The method according to claim 11, wherein the first symbol sequence further comprises M phase tracking reference signal PTRS groups, a location that is of a PTRS symbol in the M PTRS groups and that is in the first symbol sequence is determined based on a first value, and the first value is equal to a number of resource elements REs in a scheduled bandwidth minus a number of REs corresponding to the DMRS symbol sequence.

13. The method according to claim 12, wherein M is equal to P, P-1, or P-2, P is a $k^{th}$ power of 2, and k is a positive integer.

14. The method according to claim 11, wherein the first symbol sequence further comprises X PTRS symbols of N PTRS symbols, locations of the N PTRS symbols are determined based on a second value, the second value is equal to a number of REs in a scheduled bandwidth, and both N and X are positive integers; and
a location of a PTRS symbol other than the X PTRS symbols of the N PTRS symbols overlaps a location of the DMRS symbol sequence.

15. The method according to any one of claims 11 to 14, wherein

the first DMRS symbol sequence comprises a DMRS basic symbol sequence, and the second DMRS symbol sequence comprises a cyclic prefix CP of the DMRS basic symbol sequence; or
the first DMRS symbol sequence comprises the DMRS basic symbol sequence and one part of the CP, and the second DMRS symbol sequence comprises the other part of the CP; or
the first DMRS symbol sequence comprises the DMRS basic symbol sequence and a cyclic suffix CS of the DMRS basic symbol sequence, and the second DMRS symbol sequence comprises the CP; or
the first DMRS symbol sequence comprises the DMRS basic symbol sequence, one part of the CP, and the CS, and the second DMRS symbol sequence comprises the other part of the CP; or
the first DMRS symbol sequence comprises the CS, and the second DMRS symbol sequence comprises the CP and the DMRS basic symbol sequence; or
the first DMRS symbol sequence comprises one part of the CS, and the second DMRS symbol sequence comprises the CP, the DMRS basic symbol sequence, and the other part of the CS.

16. The method according to any one of claims 11 to 15, wherein a number of symbols in the first DMRS symbol sequence is equal to a number of PTRS symbols in one PTRS group in the first symbol sequence; or
a number of symbols in the second DMRS symbol sequence is equal to the number of PTRS symbols in the PTRS group.

17. The method according to any one of claims 11 to 16, wherein the method further comprises:
sending first information to a terminal device, wherein the first information comprises at least one of the following:

the number of symbols in the first DMRS symbol sequence;
the number of symbols in the second DMRS symbol sequence;
a first index value, wherein the first index value is associated with the number of symbols in the first DMRS symbol sequence and/or the number of symbols in the second DMRS symbol sequence;
a location index of the first DMRS symbol sequence;
a location index of the second DMRS symbol sequence; and
a second index value, wherein the second index value is associated with the location index of the first DMRS symbol sequence and/or the location index of the second DMRS symbol sequence.

18. The method according to any one of claims 11 to 16, wherein the method further comprises:
sending second information to a terminal device, wherein the second information indicates a cyclic shift value, the cyclic shift value is used to perform a cyclic shift on a third symbol sequence, the third symbol sequence comprises the DMRS symbol sequence, and the DMRS symbol sequence is continuously distributed in the third symbol sequence.

19. A communication apparatus, comprising a module configured to perform the method according to any one of claims 1 to 18.

20. A communication apparatus, comprising a processor, wherein the processor is coupled to a memory, the memory stores a computer program, and the processor is configured to invoke a part or all of the computer program in the memory, to enable the method according to any one of claims 1 to 18 to be performed.

21. A computer-readable storage medium, wherein the storage medium stores a computer program, and when a part or all of the computer program is executed by a computer, the method according to any one of claims 1 to 18 is performed.

22. A computer program product, wherein when a computer reads and executes the computer program product, the method according to any one of claims 1 to 18 is performed.

Network device

② ②

Network device

① ①

Network device

Terminal device

Terminal
device

Terminal device

Terminal device

Terminal device

Terminal device

Terminal device

Terminal
device

③

eMBB

Multi-station transmission

Backhaul

D2D

FIG. 1

FIG. 2

FIG. 3

```
                    ┌─────────┐
                    │  DMRS   │
                    └────┬────┘
                         │
                    ┌────┴────┐
                    │  PTRS   │
                    └────┬────┘
                         │
┌──────────┐  ┌────────┐  ┌──────────┐  ┌──────────┐  ┌─────┐  ┌──────────┐  ┌─────────┐
│Source bit│→ │Encoding│→ │   QAM    │→ │ Mapping/ │→ │ DFT │→ │ Mapping  │→ │  IFFT+   │──▽
│generation│  │        │  │modulation│  │Arrangement│ │     │  │to an RE  │  │adding a  │ ╲
└──────────┘  └────────┘  └──────────┘  └──────────┘  └─────┘  └──────────┘  │   CP     │  ╲
                                                                              └─────────┘   ▽
┌────────┐  ┌──────────┐  ┌──────────┐  ┌──────────┐  ┌─────┐  ┌──────────┐  ┌─────────┐
│Decoding│← │   QAM    │← │Phase noise│← │ Channel  │← │IDFT │← │Demapping │← │  FFT+   │
│        │  │demodulation│ │estimation│  │equalization│ │    │  │from the RE│ │removing │
└────────┘  └──────────┘  └──────────┘  └──────────┘  └─────┘  └──────────┘  │ the CP  │
                              ▲               │                               └─────────┘
                              │          ┌────▼────┐
                              └──────────│  PTRS   │
                                         └─────────┘
```

FIG. 4

```
┌─────────────────────┐                        ┌─────────────────────┐
│   Transmit end      │                        │    Receive end      │
│  (terminal device)  │                        │  (network device)   │
└─────────────────────┘                        └─────────────────────┘
           │                                               │
┌──────────────────────────┐                               │
│ S501: Generate a first   │                               │
│ symbol sequence, where   │                               │
│ the first symbol         │                               │
│ sequence includes a      │                               │
│ demodulation reference   │                               │
│ signal DMRS symbol       │                               │
│ sequence                 │                               │
└──────────────────────────┘                               │
           │                                               │
┌──────────────────────────┐                               │
│ S502: Process the first  │                               │
│ symbol sequence to       │                               │
│ generate a second        │                               │
│ symbol sequence          │                               │
└──────────────────────────┘                               │
           │     S503: Second symbol sequence              │
           │──────────────────────────────────────────────▶│
           │                                               │
           │                          ┌────────────────────────────────┐
           │                          │ S504: Process the second symbol│
           │                          │ sequence to obtain the first   │
           │                          │ symbol sequence                │
           │                          └────────────────────────────────┘
           │                                               │
           │                          ┌────────────────────────────────┐
           │                          │ S505: Perform phase noise      │
           │                          │ estimation based on at least a │
           │                          │ part of the DMRS symbol        │
           │                          │ sequence                       │
           │                          └────────────────────────────────┘
           │                                               │
```

FIG. 5

(a)

| CP | DMRS basic symbol sequence | |
|---|---|---|

(b)

| CP | DMRS basic symbol sequence | CS | |
|---|---|---|---|

(c)

| | CP | DMRS basic symbol sequence |
|---|---|---|

(d)

| | CP | DMRS basic symbol sequence | CS |
|---|---|---|---|

FIG. 6

(a)

| DMRS basic symbol sequence | | CP |
|---|---|---|

(b)

| CP | DMRS basic symbol sequence | | CP |
|---|---|---|---|

(c)

| DMRS basic symbol sequence | CS | | CP |
|---|---|---|---|

(d)

| CP | DMRS basic symbol sequence | CS | | CP |
|---|---|---|---|---|

(e)

| CS | | CP | DMRS basic symbol sequence |
|---|---|---|---|

(f)

| CS | | CP | DMRS basic symbol sequence | CS |
|---|---|---|---|---|

FIG. 7

FIG. 8A

FIG. 8B

FIG. 8C

FIG. 9

FIG. 10

PTRS group

Equivalent
to one
PTRS group

(a) | CP 1 | DMRS basic symbol sequence 1 | CP 2 | DMRS basic symbol sequence 2 | | | | | | CP 1 |

Equivalent
to one
PTRS group

(b) | CP 1 | DMRS basic symbol sequence 1 | | | CP 2 | DMRS basic symbol sequence 2 | | | CP 1 |

Equivalent
to one
PTRS group

(c) | CP 1 | DMRS basic symbol sequence 1 | CS 1 | CP 2 | DMRS basic symbol sequence 2 | CS 2 | | | | CP 1 |

Equivalent
to one
PTRS group

Equivalent
to one
PTRS group

(d) | CP 1 | DMRS basic symbol sequence 1 | CS 1 | | | | CP 2 | DMRS basic symbol sequence 2 | CS 2 | CP 1 |

FIG. 11

1200

Storage unit — 1201

Processing unit — 1202

Communication unit — 1203

FIG. 12

1300

Communication apparatus

Transceiver — 1301

Processor — 1302

1304

1303

Memory

FIG. 13

**INTERNATIONAL SEARCH REPORT**

| International application No. |
| --- |
| **PCT/CN2023/115345** |

| | |
| --- | --- |
| **A.** | **CLASSIFICATION OF SUBJECT MATTER** |
| | H04L5/00(2006.01)i |

According to International Patent Classification (IPC) or to both national classification and IPC

| | |
| --- | --- |
| **B.** | **FIELDS SEARCHED** |

Minimum documentation searched (classification system followed by classification symbols)

    IPC: H04L

Documentation searched other than minimum documentation to the extent that such documents are included in the fields searched

Electronic data base consulted during the international search (name of data base and, where practicable, search terms used)

    3GPP; CNTXT; VEN; ENTXTC; CNKI: 变换预编码, 离散傅里叶变换, 参考序列, 低, 峰均比, 峰均功率比, 峰值平均功率比, 时分, 复用, 估计, 相位, 解调参考信号, 结束, 前, 时域, 数据, 插入, 添加, 头, 尾, 循环后缀, 循环前缀, 噪声, 转换预编码, CP, CS, DFT, DMRS, PAPR, PTRS, RS, pre-DFT, LOW+, DFT-S-OFDM, head, tail, TDM, data, add+

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | US 2020076558 A1 (WISIG NETWORKS PRIVATE LIMITED) 05 March 2020 (2020-03-05)<br>    description, paragraphs [0043]-[0116], and figures 3-7 and 8B | 1-22 |
| X | US 2019356526 A1 (WISIG NETWORKS PRIVATE LIMITED) 21 November 2019 (2019-11-21)<br>    description, paragraphs [0002]-[0157] | 1-22 |
| A | CN 110166194 A (HUAWEI TECHNOLOGIES CO., LTD.) 23 August 2019 (2019-08-23)<br>    entire document | 1-22 |

| ☐ Further documents are listed in the continuation of Box C. | ☑ See patent family annex. |
| --- | --- |

| | | | |
| --- | --- | --- | --- |
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 December 2023** | **11 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/115345**

| Patent document cited in search report | | | Publication date (day/month/year) | Patent family member(s) | | | Publication date (day/month/year) |
|---|---|---|---|---|---|---|---|
| US | 2020076558 | A1 | 05 March 2020 | US | 10958395 | B2 | 23 March 2021 |
| US | 2019356526 | A1 | 21 November 2019 | US | 11025471 | B2 | 01 June 2021 |
| CN | 110166194 | A | 23 August 2019 | None | | | |

Form PCT/ISA/210 (patent family annex) (July 2022)